Europäisches Patentamt

European Patent Office

Office européen des brevets

(19)

(11) **EP 1 502 651 B1**

(12) **FASCICULE DE BREVET EUROPEEN**

(45) Date de publication et mention
de la délivrance du brevet:
**08.11.2006 Bulletin 2006/45**

(51) Int Cl.:
***B04B 9/14*** (2006.01)

(21) Numéro de dépôt: **04291284.0**

(22) Date de dépôt: **19.05.2004**

(54) **Procédé pour équilibrer un plateau rotatif d'une centrifugeuse et centrifugeuse mettant en oeuvre le procédé**

Vorrichtung und Verfahren zum Auswuchten einer Drehscheibe einer Zentrifuge

Device and method for balancing a rotating plate of a centrifuge

(84) Etats contractants désignés:
**AT BE BG CH CY CZ DE DK EE ES FI FR GB GR HU IE IT LI LU MC NL PL PT RO SE SI SK TR**

(30) Priorité: **29.07.2003 FR 0309281**

(43) Date de publication de la demande:
**02.02.2005 Bulletin 2005/05**

(73) Titulaire: **Diagyr**
**34830 Jacou (FR)**

(72) Inventeur: **Escal, Philippe**
**34170 Castelnau le Nez (FR)**

(74) Mandataire: **Laget, Jean-Loup**
**Cabinet LOYER**
**161, rue de Courcelles**
**75017 Paris (FR)**

(56) Documents cités:
**DE-A- 10 017 904**　　**FR-A- 2 776 773**
**US-A- 4 513 464**　　**US-A- 5 800 331**

**EP 1 502 651 B1**

**Description**

La présente invention concerne un procédé pour équilibrer un plateau rotatif d'une centrifugeuse comportant un capteur de position apte à fournir un signal indicatif d'une position angulaire du plateau rotatif, et plusieurs porte-tube qui sont situés dans des positions angulaires définies à la périphérie du plateau rotatif et qui ont chacun des moyens aptes à recevoir un tube à échantillon.

Certains dosages, effectués par exemple par les laboratoires d'analyses médicales, nécessitent au préalable une séparation par gravitation en plusieurs phases de densités différentes d'un échantillon liquide à analyser. Pour accélérer le processus de séparation, on utilise une centrifugeuse qui permet d'augmenter considérablement la force de gravitation, au moyen d'une accélération centrifuge. Cependant, le plateau d'une centrifugeuse doit être équilibré au mieux avant sa mise en rotation pour éviter qu'un balourd ne perturbe le mouvement, en engendrant un niveau élevé de vibrations voire même ne provoque des dommages mécaniques.

Couramment, l'équilibrage du plateau rotatif du rotor de la centrifugeuse se fait en répartissant au mieux, de façon manuelle, la masse des échantillons à traiter. Par exemple, comme décrit dans le document EP-A-0088440, lors du chargement des tubes à échantillon dans les porte-tube, une unité de commande de la centrifugeuse fait tourner le rotor pas à pas de manière à amener séquentiellement les porte-tube au dessous d'une ouverture de chargement dans un ordre prédéfini. Plus précisement un premier tube d'échantillon est placé dans un premier porte-tube, un second tube à échantillon est ensuite placé dans un second porte-tube diamétralement opposé par rapport au premier porte-tube, un troisième tube à échantillon est ensuite placé dans un troisième porte-tube, un quatrième tube à échantillon est ensuite placé dans un quatrième porte-tube diamétralement opposé par rapport au troisième porte-tube, et ainsi de suite. Un tel procédé d'équilibrage ne peut donner un bon résultat que si on place un nombre pair de tubes à échantillon dans les porte-tube du rotor, et encore à condition que les tubes à échantillon diamétralement opposés sur le rotor et leurs contenus aient à chaque fois le même poids, ce qui est rarement le cas dans la pratique.

Dans un autre système connu (WO-A-98/01760), chaque porte-tube est constitué par une sorte de panier comportant plusieurs alvéoles, chaque alvéole étant destinée à recevoir un tube à échantillon contenant un échantillon à centrifuger et à analyser, ou à recevoir éventuellement un tube à essai "factice", contenant une masse d'équilibrage prédéterminée. Il est prévu un nombre pair de paniers, par exemple quatre paniers, qui sont groupés par paires, les deux paniers de chaque paire étant destinés à être installés dans des positions diamétralement opposées sur le rotor de la centrifugeuse. Les tubes à échantillon et les paniers sont pesés, et les positions des tubes à échantillon dans les paniers sont corrélés avec leurs poids de manière à obtenir une répartition symétrique dans chaque panier. Plus précisément, les paniers chargés de tubes à échantillon sont équilibrés par exemple en chargeant à chaque fois une paire de paniers en utilisant une répartition ou distribution symétrique de chargement dans les paniers, qui contiennent des nombres égaux de cases chargées d'un tube à échantillon, et/ou en plaçant des tubes à essai "factices" dans les paniers qui nécessitent un poids supplémentaire pour obtenir l'équilibrage. Les tubes à essai factices sont choisis dans une réserve de tubes à essai factices contenant des masses d'équilibrage prédéterminées, dont les poids ont des valeurs échelonnées. Les tubes à essai factices sont ajoutés dans les paniers qui nécessitent un poids supplémentaire de telle façon que la différence de poids entre les deux paniers d'une paire de panier ne dépasse pas 10 grammes.

Bien que dans ce système connu les opérations de chargement puissent être effectuées au moyen d'un bras de robot commandé par ordinateur, les opérations de chargement sont relativement longues et compliquées. En outre, un tel procédé connu de chargement ne peut pas être mis en oeuvre dans le cas des centrifugeuses relativement simples ne comportant pas de "paniers", mais un seul porte-tube, donc un seul tube à échantillon dans chaque position angulaire à la périphérie du rotor. Enfin, compte tenu de la tolérance de 10 grammes pour la différence de poids par paire de paniers, lorsqu'il y a quatre paniers on peut avoir dans le cas le plus défavorable un balourd total d'environ 14 grammes. Or, la vitesse de rotation nominale en cours de centrifugation peu atteindre 3600 tours/min soit, pour un rayon de giration de 0,2 m, une accélération centrifuge qui peut atteindre environ 28 400 m.s$^{-2}$ ou 2900 g (g=9,81m.s$^{-2}$). Pour un balourd de 14 grammes, cela conduit à une force centrifuge d'environ 400 N, soit une force relativement importante.

Le document FR 2 776 77A quant à lui, décrit un procédé d'équilibrage utilisant entre autre un détecteur de décalage de phase relié à un filtre passe-bande ainsi qu'à un palpeur d'angle de rotation du rotor.

La présente invention a donc pour but de proposer un procédé pour réaliser un équilibrage automatisé du plateau rotatif ou rotor d'une centrifugeuse du type défini en préambule, procédé qui permet d'obtenir une précision beaucoup plus grande de l'équilibrage.

A cet effet, le procédé selon l'invention est caractérisé en ce qu'il comprend les étapes consistant :

a) à utiliser comme porte - tube, des porte-tube ayant chacun un conteneur d'équilibrage en plus desdits moyens aptes à recevoir un tube à échantillon ;

b) à charger au moins un certain nombre desdits porte-tube chacun avec un tube à échantillon rempli d'un échantillon de liquide à centrifuger ;

2

c) à faire tourner le plateau rotatif à une vitesse de rotation prédéfinie ;

d) à déterminer, sur la base de ladite vitesse de rotation prédéfinie et sur la base du signal fourni par le capteur de position et d'un signal fourni par un capteur d'accélération coupée au plateau rotatif, une position angulaire et une masse d'un balourd sur le plateau rotatif, dû à un chargement inégal dudit plateau rotatif ;

e) à déterminer, sur la base de la position angulaire du balourd déterminée à l'étape d), au moins une position angulaire sur le plateau rotatif pour au moins une masse d'équilibrage ;

f) à réduire la vitesse du plateau rotatif et à l'amener par une rotation lente jusqu'à une position d'arrêt telle que la position angulaire déterminée à l'étape e) se trouve en correspondance avec un poste fixe d'approvisionnement en produit d'équilibrage ; et

g) à remplir celui des conteneurs d'équilibrage qui se trouve au poste fixe d'approvisionnement quand le plateau rotatif est dans ladite position d'arrêt, avec une quantité de produit d'équilibrage ayant une masse égale à au moins une fraction de la masse du balourd déterminée à l'étape d).

Le procédé de l'invention peut en outre présenter l'une ou l'autre des caractéristiques suivantes.

Dans un premier mode de réalisation du procédé, l'étape e) consiste :

e1) à calculer la position angulaire qui est diamétralement opposée, sur le plateau rotatif, à la position angulaire du balourd déterminée à l'étape d) ;

e2) à vérifier si la position angulaire calculée à l'étape e1) correspond à une desdites positions angulaires définies des porte-tube et du conteneur d'équilibrage y associé et, dans l'affirmative, à adopter comme position angulaire pour la masse d'équilibrage la position angulaire calculée à l'étape e1), sinon, à adopter comme position angulaire pour la masse d'équilibrage la position angulaire du porte - tube et du conteneur d'équilibrage y associé qui est la plus proche de la position angulaire calculée à l'étape e1).

Dans un second mode de réalisation du procédé, l'étape e) consiste :

e1) à calculer la position angulaire qui est diamétralement opposée, sur le plateau rotatif, à la position angulaire du balourd déterminée à l'étape d) ;

e2) à vérifier si la position angulaire calculée à l'étape e1) correspond à une desdites positions angulaires définies des porte-tube et du conteneur d'équilibrage y associé et, dans l'affirmative, à adopter comme position angulaire pour la masse d'équilibrage la position angulaire calculée à l'étape e1), sinon, à adopter comme positions angulaires pour au moins deux masses d'équilibrage au moins deux positions angulaires correspondant à au moins deux des porte-tube et aux conteneurs d'équilibrage y associés qui sont situés de part et d'autre de la position angulaire calculée à l'étape e1), et à calculer au moins deux masses d'équilibrage devant être placées respectivement dans les conteneurs d'équilibrage correspondant aux positions angulaires adoptées, lesdites masses d'équilibrage calculées correspondant à des fractions de la masse du balourd déterminée à l'étape d) telles que la somme vectorielle des forces centrifuges dues aux masses d'équilibrage calculées une fois placées dans les conteneurs d'équilibrage situés dans lesdites positions angulaires adoptées, équilibre la force centrifuge due à la masse du balourd.

L'invention a également pour objet une centrifugeuse permettant la mise en oeuvre du procédé selon l'invention. A cet effet, l'invention fourni une centrifugeuse comprenant :

a) un bâti ;

b) un plateau monté rotatif sur le bâti et ayant plusieurs porte-tube situés dans des positions angulaires définies sur la périphérie du plateau rotatif, chaque porte - tube étant apte à recevoir un tube à échantillon ;

c) des moyens d'entraînement pour faire tourner le plateau rotatif ;

d) un capteur de position apte à fournir un signal indicatif d'une position angulaire du plateau rotatif ;

e) une unité de contrôle et de commande recevant ledit signal indicatif de position angulaire et apte à commander lesdits moyens d'entraînement de manière à faire tourner ledit plateau rotatif à au moins une vitesse de rotation prédéfinie et à arrêter ledit plateau rotatif dans des positions angulaires déterminées ;
caractérisée par

f) plusieurs conteneurs d'équilibrage qui sont respectivement adjoints aux porte-tube sur le plateau rotatif ;

g) un capteur d'accélération apte à fournir un signal indicatif de la valeur de l'accélération centrifuge à laquelle le plateau rotatif est soumis quand il tourne à une vitesse prédéfinie ;

h) un dispositif d'approvisionnement en produit d'équilibrage situé sur le bâti à un poste adjacent à la périphérie du plateau rotatif ;

i) des moyens de calcul inclus dans l'unité de contrôle et de commande, aptes à déterminer, sur la base de ladite vitesse de rotation prédéfinie et sur la base des signaux fournis par le capteur de position et le capteur d'accélération, une position angulaire et une masse d'un balourd sur le plateau rotatif, dû à un chargement inégal dudit plateau rotatif ;

j) lesdits moyens de calcul étant aptes à déterminer, sur la base de la position angulaire déterminée du balourd, au moins une position angulaire sur le plateau rotatif pour au moins une masse d'équilibrage ;

k) ladite unité de contrôle et de commande étant apte à commander lesdits moyens d'entraînement pour que ceux-ci amènent le plateau rotatif dans une position d'arrêt telle que la position angulaire déterminée pour la masse d'équilibrage se trouve en correspondance avec ledit poste fixe, et à commander ledit dispositif d'approvisionnement en produit d'équilibrage pour remplir celui des conteneurs d'équilibrage qui se trouve au poste fixe quand le plateau rotatif est dans ladite position d'arrêt, avec une quantité de produit d'équilibrage ayant une masse égale à au moins une fraction de la masse du balourd déterminée par les moyens de calcul.

La centrifugeuse de l'invention peut en outre présenter une ou plusieurs des caractéristiques suivantes :

-    ledit plateau rotatif, ledit capteur de position, ledit capteur d'accélération et lesdits moyens d'entraînement sont portés par un support mobile qui est monté pivotant par rapport au bâti autour d'un axe vertical de pivotement parallèle à l'axe de rotation du plateau rotatif et qui est apte à osciller de part et d'autre d'une position neutre quand le plateau rotatif tourne à ladite vitesse prédéfinie avec un chargement inégal ;

-    l'axe de rotation du plateau rotatif est situé à une première distance de l'axe vertical de pivotement, et le capteur d'accélération est situé à une seconde distance dudit axe vertical de pivotement dans un plan vertical défini par ledit axe vertical de pivotement et par ledit axe de rotation, ladite seconde distance étant plus grande que ladite première distance ;

-    lesdits moyens de calcul calculent la masse $m_0$ du balourd d'après une première formule :

$$m_0 \quad = \frac{\Gamma'_0}{\gamma_c} \cdot \frac{M}{K}$$

dans laquelle $\Gamma'_0$ est une valeur d'accélération mesurée par le capteur d'accélération, K est un coefficient d'amplification dont la valeur est égale au rapport (L2/L1) desdites seconde et première distances, M est la masse totale du support mobile et de toutes les pièces de la centrifugeuse portées par ledit support mobile ; et $\gamma_c$ est la valeur de l'accélération centrifuge due à la masse $m_0$ du balourd quand le plateau rotatif tourne à la vitesse de rotation prédéfinie ;

-    les moyens de calcul recalculent la masse $m_0$ du balourd d'après une seconde formule :

$$m_0 = \frac{m_1}{K} \cdot \frac{\Gamma'_0}{\gamma_c} \cdot \frac{\Gamma'_1 + K\gamma_c}{\Gamma'_0 - \Gamma'_1}$$

dans laquelle $m_1$ est une première masse d'équilibrage calculée d'après la première formule et $\Gamma_1'$ est une valeur d'accélération mesurée par le capteur d'accélération quand le plateau rotatif munie de la première masse d'équilibrage est entraîné en rotation à la vitesse de rotation prédéfinie, et les moyens de calcul calculent ensuite une seconde masse d'équilibrage $m_2 = m_0 - m_1$, à partir de la seconde formule afin de compléter l'équilibrage du plateau rotatif ;

- la centrifugeuse comprend des moyens d'indexation débrayables qui sont commandés par l'unité de contrôle et de commande de façon à maintenir ledit support mobile dans ladite position neutre quand le plateau rotatif est à l'arrêt et quand il tourne à une vitesse nettement plus petite que ladite vitesse de rotation prédéfinie ;

- le produit d'équilibrage est un liquide ;

- le dispositif d'approvisionnement en produit d'équilibrage comprend :

   a) au poste fixe, une aiguille verticale creuse de remplissage et de vidange et un mécanisme de montée et de descente, commandé par l'unité de contrôle et de commande, pour déplacer verticalement ladite aiguille entre une position haute d'attente, dans laquelle l'extrémité inférieure de l'aiguille est à un niveau plus haut qu'une ouverture supérieure du conteneur d'équilibrage à remplir, et au moins une position basse de remplissage/ vidange dans laquelle l'aiguille est engagée dans ledit conteneur d'équilibrage à remplir ou à vider ;

   b) un réservoir de liquide d'équilibrage ; et

   c) une pompe reliée audit réservoir de liquide d'équilibrage et à ladite aiguille par des tuyaux souples et par une électrovanne commandée par l'unité de contrôle et de commande, ladite électrovanne ayant une position neutre d'attente, une première position de travail dans laquelle le liquide d'équilibrage peut circuler du réservoir vers l'aiguille, et une seconde position de travail dans laquelle le liquide d'équilibrage peut circuler de l'aiguille vers le réservoir ;

- la centrifugeuse comprend en outre un détecteur de niveau de liquide agencé pour détecter un niveau de liquide dans un conteneur d'équilibrage situé audit poste fixe et pour fournir un signal indicatif du niveau détecté de liquide utilisable par l'unité de contrôle et de commande pour commander la pompe et/ou l'électrovanne.

D'autres caractéristiques et avantages de l'invention ressortiront au cours de la description suivante d'un mode de réalisation donner à titre d'exemple en référence aux dessins annexés sur lesquels :

- la figure 1 est une vue schématique en coupe verticale d'une centrifugeuse selon l'invention ;

- la figure 2 est une vue en coupe verticale suivant la ligne II - II de la figure 1 ;

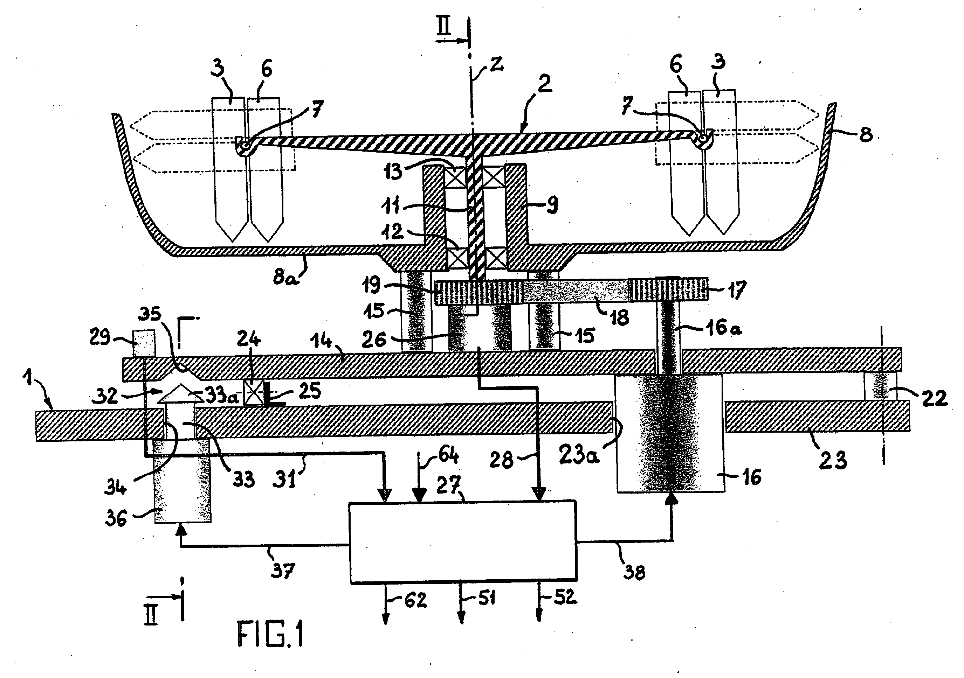

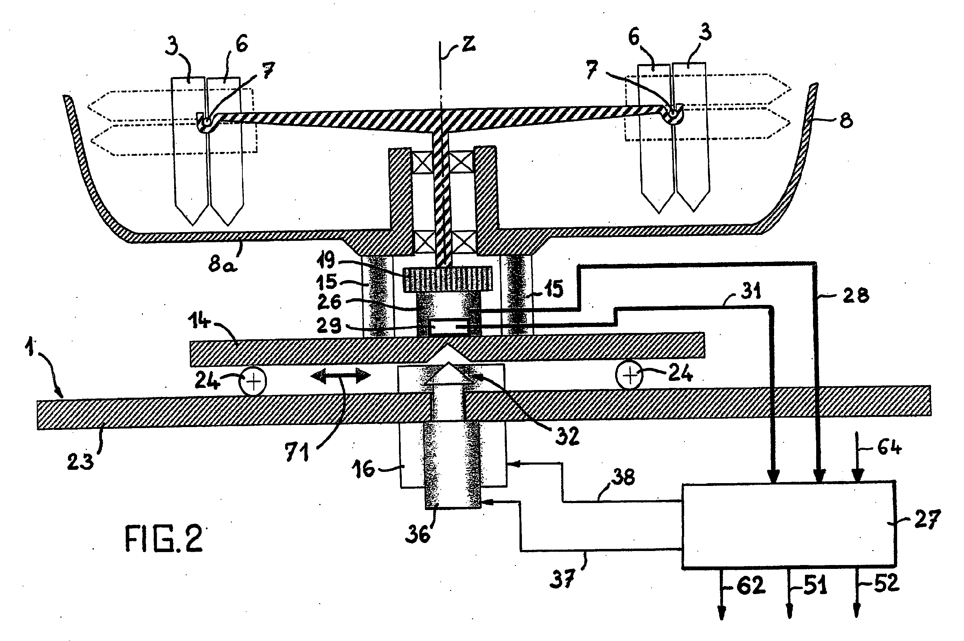

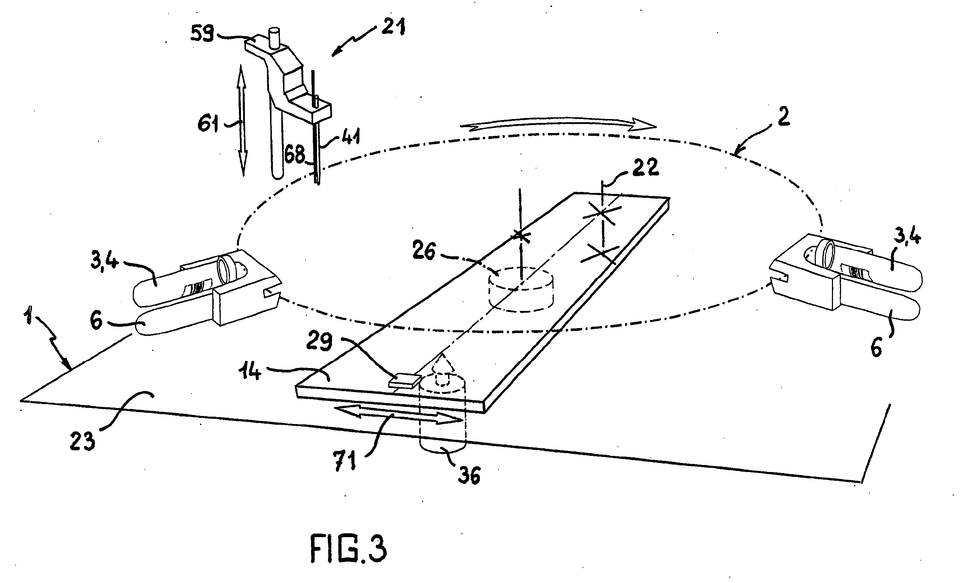

- le figure 3 est une vue schématique en perspective illustrant le fonctionnement de la centrifugeuse des figures 1 et 2 ;

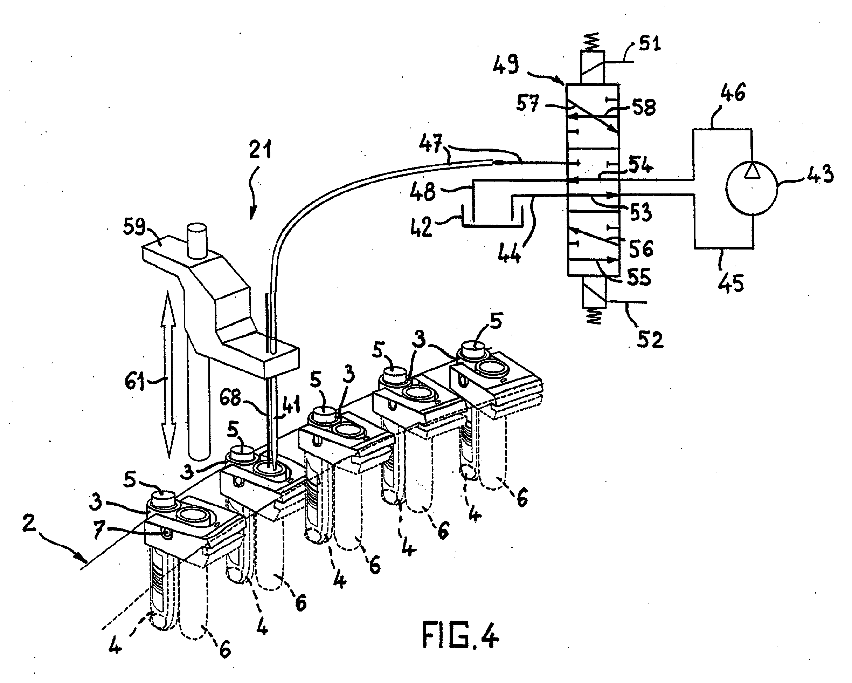

- la figure 4 est une vue partielle de la centrifugeuse des figures 1 à 3, montrant comment s'effectue le remplissage d'un conteneur d'équilibrage du plateau rotatif de la centrifugeuse ;

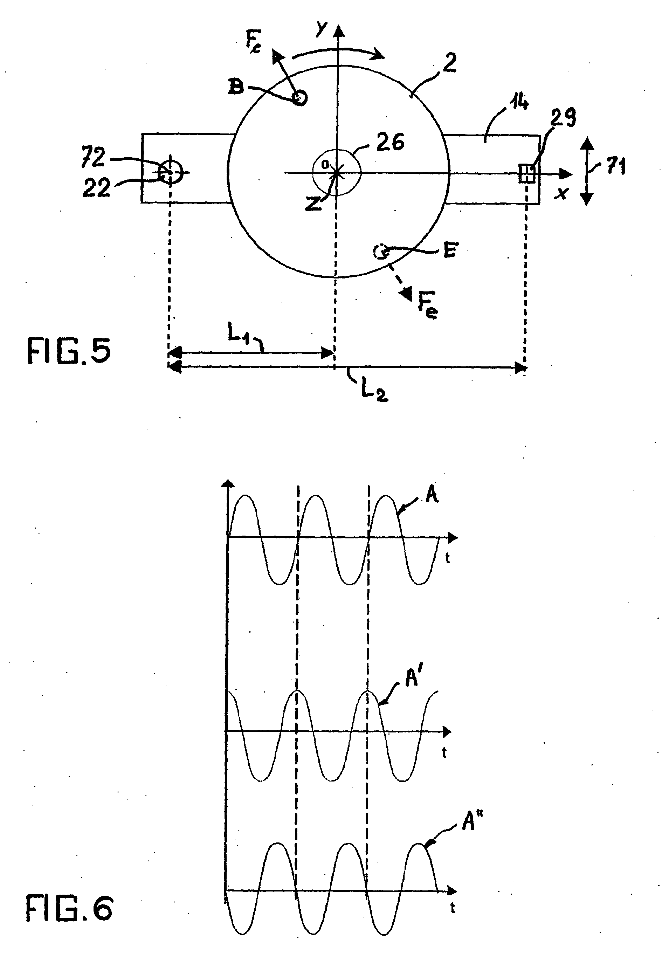

- la figure 5 est une vue schématique en plan permettant d'expliquer le principe sur lequel est basé le procédé de l'invention pour déterminer la position angulaire d'un balourd sur le plateau rotatif et la masse dudit balourd ;

- la figure 6 est un graphique relatif au mouvement d'un support oscillant portant le plateau rotatif de la centrifugeuse ;

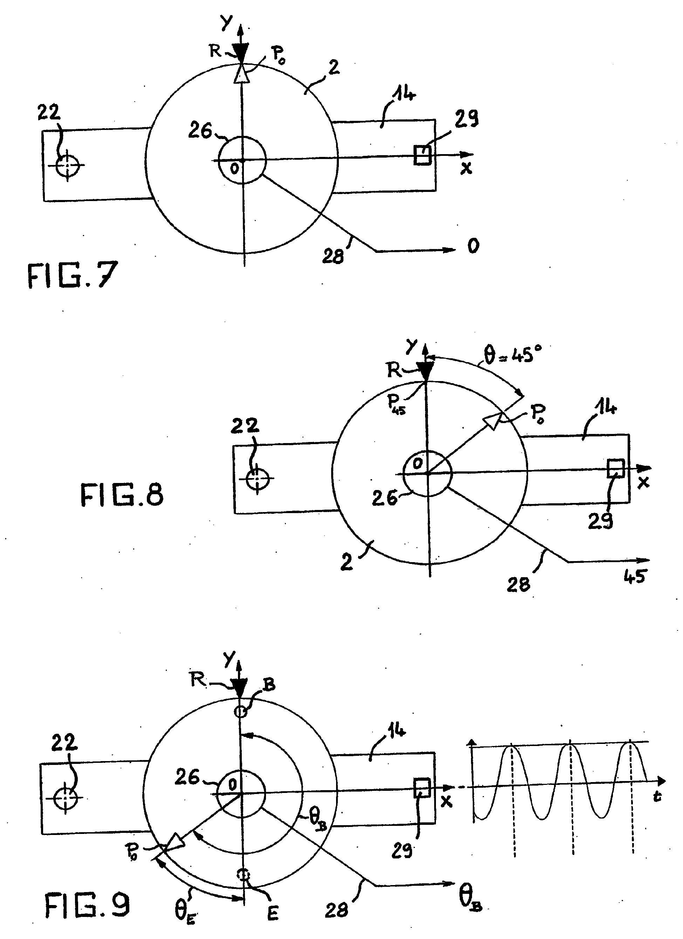

- les figures 7 à 9 sont des vues schématiques en plan semblables à la figure 5, illustrant le fonctionnement d'un capteur de position utilisé dans la centrifugeuse pour déterminer la position angulaire d'un balourd sur le plateau rotatif ;

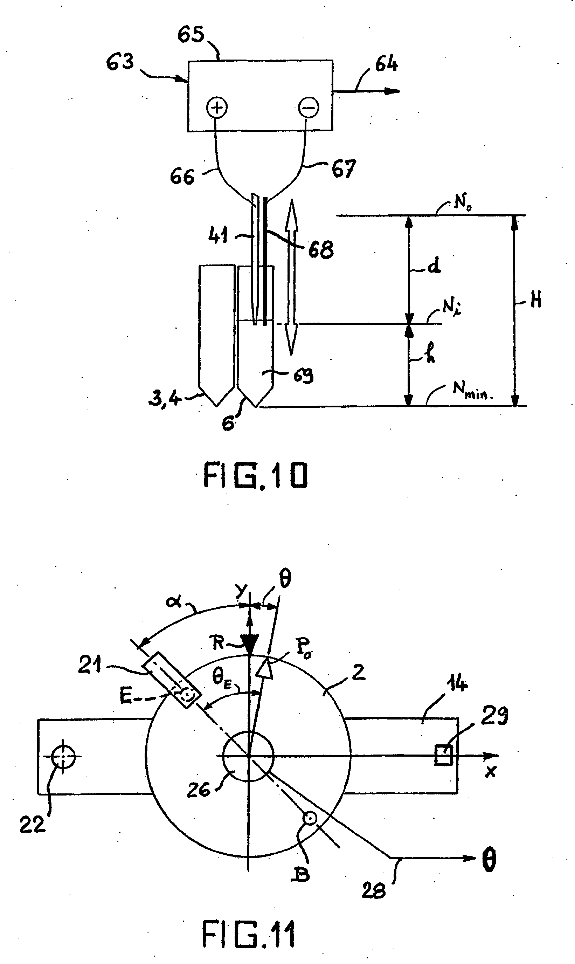

- la figure 10 est une vue schématique partielle illustrant des moyens permettant de déterminer un niveau de liquide dans un conteneur d'équilibrage ;

- la figure 11 est une vue schématique en plan semblable aux figures 5,7-9, permettant d'expliquer comment amener un point déterminé du plateau rotatif de la centrifugeuse à un poste de remplissage pour y charger une masse d'équilibrage.

En se reportant aux figures 1 et 2, on peut voir que la centrifugeuse selon l'invention comporte un bâti 1 sur lequel est monté un plateau rotatif 2 ayant plusieurs porte-tube 3 situés dans des positions angulaires définies sur la périphérie du plateau rotatif 2. De préférence, les porte-tube 3 sont régulièrement répartis à la périphérie du plateau rotatif 2. Chaque porte-tube est apte à recevoir un tube à échantillon 4 obturé par un bouchon 5 est contenant un échantillon devant être séparé en plusieurs phases par centrifugation.

A chaque porte-tube 4 est associé un conteneur d'équilibrage 6. Chaque porte-tube 4 et le conteneur d'équilibrage 6 qui lui est adjoint forme un ensemble qui est monté basculant par rapport au plateau rotatif 2 de manière à pouvoir basculer autour d'un axe horizontal de basculement 7 qui s'étend tangentiellement à la circonférence du plateau rotatif 2. Ainsi, chaque ensemble constitué par un porte-tube 3 et par le conteneur d'équilibrage 6 qui lui est adjoint peut basculer entre une position verticale de repos montrée en trait plein dans les figures 1 et 2, quand le plateau 2 ne tourne pas, et une position horizontale ou sensiblement horizontale de centrifugation montrée en traits mixtes dans les figures 1 et 2, quand le plateau rotatif 2 est entraîné en rotation à grande vitesse, par exemple 3000 tours/min ou plus.

Le plateau est disposé dans une cuvette 8 à bord circulaire, dont le diamètre est sensiblement plus grand que celui du plateau 2. Au milieu de la cuvette 8 se trouve un puits cylindrique 9, qui fait saillie vers le haut à partir du fond 8a de la cuvette 8. Le plateau 2 est fixé à l'extrémité supérieure d'un arbre vertical 11 qui s'étend vers le bas à l'intérieur du puits 9 et est monté à rotation par l'intermédiaire de paliers à roulements 12 et 13. Le plateau 2 et l'arbre 11 peuvent être réalisés d'une seule pièce, de préférence en un matériau léger, par exemple en une matière plastique ou en métal léger tel que l'aluminium ou un alliage d'aluminium. La cuvette 8 est supportée par une plaque horizontale de support 14 par l'intermédiaire de plusieurs colonnettes-entretoises, de manière à ménager un espace entre la plaque 14 et le fond 8a de la cuvette 8. L'extrémité inférieure de l'arbre 11 fait saillie dans l'espace susmentionné. L'arbre 11 et par suite, le plateau peuvent être entraînés en rotation par un moteur électrique 16, de préférence un moteur pas à pas, qui est fixé à la plaque (14) en dessous de celle-ci. L'arbre de sorti 16a du moteur 16 traverse la plaque 14 et porte à son extrémité supérieure, une poulie crantée 17 reliée cinématiquement par une courroie crantée 18 à une autre poulie crantée 19 qui est fixée à l'extrémité inférieure de l'arbre 11.

Par construction, l'ensemble constitué par le plateau 2, les porte-tube 3, les conteneurs d'équilibrage 6 et l'arbre 11 est un ensemble équilibré. Cependant, en service, si le plateau n'est pas chargé de manière uniforme, le plateau rotatif 2 sera alors déséquilibré. Une telle situation peut se produire notamment si tous les porte-tube 3 ne sont pas garnis d'un tube à échantillon et si, dans ce cas, les tubes à échantillon ne sont pas répartis uniformément dans les porte-tube 3 et /ou si les échantillons contenus dans tous les tubes à échantillon ou tout au moins ceux qui sont contenus dans des tubes à échantillon situés dans des porte-tube occupant des positions diamétralement opposées sur le plateau rotatif n'ont pas le même poids, ce qui peut arriver fréquemment en pratique. En effet, dans ces cas, la somme vectorielle des forces centrifuges élémentaires appliquées en chaque point du plateau 2 n'est pas nulle et, comme cela est bien connu, le plateau 2 est alors soumis à une force centrifuge résultante $F_c$ (figure 5) qui est dirigé radialement par rapport au plateau 2 et qui est transmise au support de celui-ci, en l'occurrence à la plaque 14, par l'intermédiaire des deux paliers 12 et 13, du puits 9 de la cuvette 8 et des colonnettes - entretoises 15. Cette force centrifuge résultante $F_c$ s'applique en un seul point B (figure 5) du plateau 2, appelé balourd, qui tourne avec le plateau 2, mais dont la position sur le dit plateau dépend de la répartition des charges sur celui-ci et peut donc varier d'un chargement à l'autre. Comme cela est bien connu la force $F_c$ appliquée au balourd B perturbe le mouvement du plateau 2, engendre des vibrations et peut provoquer des dommages mécaniques, notamment aux paliers 12 et 13. Pour éviter cela, il est nécessaire de compenser la force $F_c$ par une force d'équilibrage $F_e$ (figure 5) ayant une intensité égale et une direction opposée respectivement à l'intensité et la direction de la force $F_c$.

A cet effet, dans la centrifugeuse de l'invention, un conteneur d'équilibrage 6 est adjoint à chaque porte-tube 3, et des moyens sont prévus pour déterminer la position angulaire et la masse du balourd B et, par suite, pour déterminer la position angulaire du point E qui est diamétralement opposé au balourd B et auquel doit être placée une masse d'équilibrage pour obtenir la force centrifuge de compensation $F_e$ équilibrant la force centrifuge $F_c$ appliquée au balourd B. Il est en outre prévu un dispositif 21 d'approvisionnement en produit d'équilibrage, qui est situé sur le bâti 1 de la centrifugeuse à un poste fixe adjacent à la périphérie du plateau rotatif 2, ainsi que des moyens permettant d'emmener automatiquement le point déterminé E dudit plateau rotatif 2 au dispositif d'approvisionnement 21 afin de remplir le conteneur d'équilibrage 6 correspondant au point E avec une masse appropriée de produit d'équilibrage, par exemple de l'eau comme cela va maintenant être décrit à propos d'un mode de réalisation de la présente invention.

Comme montré dans les figures 1 à 3, la plaque de support 14 a une forme rectangulaire allongée et est montée pivotante, à une de ses extrémités, sur un axe vertical 22 porté par une plaque horizontale 23 qui fait partie du bâti 1. A son extrémité opposée, la plaque de support 14 prend appui sur la plaque 23 par l'intermédiaire d'au moins un galet, de préférence deux galets 24 montés sur roulement à billes ou roulement à aiguilles. Chaque galet 24 est porté par l'une des branches d'une équerre 25 dont l'autre branche est fixée à la face supérieure de la plaque 23, comme le montre la figure 1. Dans ce cas, la plaque de support 14 repose sur les galets 24. En variante, les équerres 25 pourraient être fixées à la face inférieure de la plaque de support 14 et, dans ce cas, les galets peuvent rouler sur la face supérieure de la plaque 23.

La plaque de support 14 porte un capteur de position 26, comportant un rotor (non montré) qui est lié à l'extrémité inférieure de l'arbre 11 du plateau 2 de façon à tourner avec celui-ci. Comme cela sera expliqué en détail plus loin, le capteur de position 26 est apte à fournir un signal indicatif d'une position angulaire du plateau rotatif 2 à une unité de contrôle et de commande 27 de la centrifugeuse à travers une ligne 28. La plaque de support 14 porte également un capteur d'accélération 29 qui est relié par une ligne 31 à l'unité de commande et de contrôle 27 et qui est apte à fournir à celle-ci un signal indicatif de la valeur d'une accélération à laquelle la plaque de support 14 et tous les éléments portés par celle-ci sont soumis en raison de la présence d'un balourd sur le plateau rotatif 2, quand celui-ci est entraîné en rotation à une vitesse de rotation prédéfinie. Comme cela est visible notamment dans la figure 5, le capteur d'accélération 29 est de préférence placé à une distance L2 de l'axe 22 plus grande que la distance L1 du centre O du plateau 2 à l'axe 22.

La plaque de support 14 peut être maintenue dans une position prédéfinie de repos ou position neutre par des moyens d'indexation 32. Les moyens d'indexation 32 peuvent comprendre par exemple une cheville verticale 33, qui peut coulisser dans un trou 34 de la plaque 23 et qui comporte, à son extrémité supérieure, une tête conique 33a pouvant être engagée dans une empreinte conique 35 formée dans la face inférieure de la plaque de support 14. Un ressort (non montré) sollicite la cheville 33 de façon à maintenir sa tête 33a dans l'empreinte conique 35. Un électro-aimant 36, dont l'armature mobile est liée ou fait partie intégrante de la cheville 33, permet, lorsqu'il est excité, de faire sortir la tête 33a de la cheville 33 hors de l'empreinte 35, pour permettre à la plaque de support 14 de pivoter librement autour de l'axe 22. L'électro-aimant 36 est relié par une ligne de commande 37 à l'unité de contrôle et de commande 27. Une autre ligne de commande 38 relie l'unité de contrôle et de commande 27 au moteur 16.

Dans le cas où on utilise un liquide, par exemple de l'eau, comme produit d'équilibrage pour remplir un ou plusieurs conteneurs d'équilibrage 6, le dispositif 21 d'approvisionnement en produit d'équilibrage peut comprendre, comme montré sur la figure 4, une aiguille verticale creuse de remplissage et de vidange 41, un réservoir de liquide d'équilibrage 42 et une pompe 43 reliée au réservoir 42 et à l'aiguille 41 par des tuyaux souples 44-48 et par une électro-vanne 49 commandée par l'unité de contrôle et de commande 27 par des lignes de commandes 51 et 52.

L'électro-vanne 49 a trois positions, à savoir :

- une position neutre d'attente (montré dans la figure 4) dans laquelle la pompe 43 aspire le liquide d'équilibrage dans le réservoir 42 à travers le tuyau 44, le passage 53 du tiroir de l'électro-vanné et le tuyau 45, et refoule le liquide d'équilibrage vers le réservoir 42 à travers le tuyau 46, le passage 54 du tiroir de l'électro-vanne et le tuyau 48 ;

- une première position de travail ou position de remplissage, dans laquelle le tiroir de l'électro-vanne est décalé vers le haut par rapport à la position représentée dans la figure 4, et dans laquelle le liquide d'équilibrage peut circuler depuis le réservoir 42 vers l'aiguille 41 à travers le tuyau 44, le passage 55 du tiroir de l'électrovanne, le tuyau 45, la pompe 43, le tuyau 46, le passage 56 du tiroir de l'électrovanne et le tuyau 47 ;

- une deuxième position de travail ou position de vidange, dans laquelle le tiroir de l'électrovanne est décalé vers le bas par rapport à la position présentée dans la figure 4, et dans laquelle le liquide de remplissage peut circuler de l'aiguille 41 vers le réservoir 42 à travers le tuyau 47, le passage 57 du tiroir de l'électrovanne, le tuyau 45, la pompe 43, le tuyau 46, le passage 58 du tiroir de l'électrovanne et le tuyau 44.

L'aiguille 41 est portée par un support 59 qui peut être déplacé verticalement par un mécanisme de montée et de descente, indiqué de manière symbolique par la double flèche 61, qui est commandé par l'unité de contrôle et de commande 27 à travers une ligne de commande 62. Le mécanisme 61 peut déplacer l'aiguille 41 entre une position haute d'attente, dans laquelle l'extrémité inférieure de l'aiguille 41 est à un niveau plus haut qu'une ouverture supérieure du conteneur d'équilibrage (6) à remplir, pour permettre au plateau 2 de tourner sans heurter l'aiguille 41, et au moins une position base de remplissage / vidange dans laquelle l'aiguille 41 est engagée dans le conteneur d'équilibrage 6 à remplir ou à vider.

La centrifugeuse comporte en outre un détecteur de niveau de liquide 63 (figure 10) relié par une ligne 64 à l'unité de contrôle et de commande 27. Le détecteur de niveau 63 est agencé pour détecter un niveau de liquide dans un conteneur d'équilibrage 6 situé en correspondance avec le dispositif d'approvisionnement 21 et pour fournir à l'unité de contrôle et de commande 27 un signal indicatif du niveau détecté de liquide utilisable par ladite unité 27 pour commander la pompe 43 et/ou l'électrovanne 49.

Comme montré dans la figure 10, le détecteur de niveau 63 peut inclure une source de tension continue 65 reliée par des fils 66 et 67 respectivement à l'aiguille 41, qui peut être en métal conducteur, et à une électrode 68 qui est portée par le support 59 et qui s'étend parallèlement à l'aiguille 41. Comme cela est visible dans les figures 3 et 4, l'aiguille 41 et l'électrode 68 s'étendent verticalement vers le bas à partir du support 59 sur la même distance, de tel sorte que leurs extrémités inférieures se trouvent à un même niveau, ce niveau dépendant lui-même de la position donnée au support 59 par le mécanisme de montée et de descente 61. L'aiguille 41 et l'électrode 68 sont isolées électriquement l'une par rapport à l'autre, de sorte que, normalement, aucun courant ne circule dans les fils 66 et 67. Par contre, quand un liquide conducteur, par exemple de l'eau, contenu dans un conteneur d'équilibrage 6 vient en contact avec les extrémités inférieures de l'aiguille 41 et de l'électrode 68, un trajet conducteur est établi et un courant circule alors dans les fils 66 et 67. Ce courant peut être utilisé pour produire sur la ligne 64 un signal indiquant que le liquide contenu dans le conteneur d'équilibrage 6 a atteint un niveau défini correspondant au niveau des extrémités inférieures de l'aiguille 41 et de l'électrode 68.

Etant donné que, par construction, tous les conteneurs d'équilibrage 6 sont identiques et sont fixés de la même manière au plateau 2, tous les conteneurs 6 ont donc le même diamètre intérieur et leur extrémité inférieure est situé à un niveau $N_{min}$ bien défini et connu au dessous du niveau $N_0$ (figure 10), lui même bien défini et connu, auquel se trouve les extrémités inférieures de l'aiguille 41 et de l'électrode 68 quand le support 59 est dans la position haute d'attente mentionnée plus haut. D'autre part, quand le support 59 est déplacé verticalement par le mécanisme 61, on peut facilement connaître à tout moment la distance verticale d à laquelle se trouve les extrémités inférieures de l'aiguille 41 et de l'électrode 68 par rapport au niveau $N_0$. Par exemple, si le mécanisme 61 comprend une vis à billes ayant un pas de vis p prédéfini et entraîné en rotation par un moteur pas à pas associé à un codeur angulaire capable de fournir un signal indiquant le nombre de tours effectués par la vis à billes depuis une position de départ correspondant à la position haute d'attente du support 59, des moyens de calcul prévus dans l'unité de contrôle et de commande 27 peuvent alors facilement calculer la distance d qui était égal au produit du pas p par le nombre de tours effectués par la vis. Connaissant la distance verticale H entre les niveaux $N_0$ et $N_{min}$ et connaissant la distance verticale d, il est possible de calculer par différence, la distance verticale h entre le niveau $N_{min}$ et le niveau $N_i$ auquel se trouve les extrémités inférieures de l'aiguille 41 et l'électrode 68.

Par conséquent, si le conteneur d'équilibrage 6 est rempli jusqu'au niveau $N_i$, connaissant la distance verticale h, le diamètre intérieur du conteneur d'équilibrage 6 et la densité du liquide 69, par exemple de l'eau, contenu dans le conteneur d'équilibrage 6, il est possible de connaître le volume et le poids du liquide dans le conteneur d'équilibrage 6.

Inversement, si on désire remplir le conteneur d'équilibrage 6 avec un poids désiré de liquide d'équilibrage, les moyens de calcul inclus dans l'unité de contrôle et de commande 27 peuvent calculer la hauteur h correspondant au poids désiré de liquide d'équilibrage et, par différence avec la distance verticale H, en déduire la distance verticale d dont il faut faire descendre le support 29 à partir de sa position haute d'attente correspondant au niveau $N_0$ pour amener les extrémités inférieures de l'aiguille 41 et de l'électrode 68 au niveau $N_i$ correspondant à la distance verticale d calculée. Après que les extrémités inférieures de l'aiguille 41 et de l'électrode 68 ont été placées au niveau $N_i$, l'unité de contrôle et de commande 27 peut commander le remplissage du conteneur d'équilibrage 6 en actionnant l'électro-vanne 49 de manière à la placer dans sa première position de travail (position de remplissage). Quand le liquide introduit dans le conteneur d'équilibrage 6 atteint le niveau $N_i$, le détecteur de niveau 63 émet sur la ligne 64 un signal qui est utilisé par l'unité de contrôle et de commande 27 pour remettre l'électrovanne 49 dans sa position neutre d'attente dans laquelle aucun liquide n'est envoyé à l'aiguille 41.

Quand on veut équilibrer le plateau rotatif 2 avant une opération de centrifugation, on place tout d'abord des tubes à échantillon, contenant chacun un échantillon de liquide à centrifuger, dans au moins un certain nombre de porte-tube 3 du plateau rotatif 2. Cette opération de chargement du plateau 2 peut être effectuée manuellement ou à l'aide d'un bras de robot, et elle est effectuée de préférence, mais pas obligatoirement, en répartissant les tubes à échantillons le plus régulièrement possible dans les porte-tube 3 à la périphérie du plateau 2. Par exemple, les tubes à échantillons peuvent être placés deux par deux dans des porte-tube situés dans des positions diamétralement opposées à la périphérie du plateau 2. Pendant cette opération, les moyens d'indexation 32 sont actifs et maintiennent la plaque de support 14 dans une position fixe par rapport à la plaque 23 du bâti 1. Dans cette position fixe, l'axe longitudinal de la plaque de support 14 passant par l'axe de pivotement 22 est confondu avec l'axe OX d'un système fixe de référence OXYZ, dont l'axe OZ est confondu avec l'axe longitudinal de l'arbre 11 du plateau 2 quand la plaque de support 14 est dans ladite position fixe, comme montré dans la figure 5.

Ensuite, par exemple en réponse à l'enfoncement d'un bouton de lancement de cycle d'équilibrage (non montré), l'unité de contrôle et de commande 27 active le moteur 16 pour faire tourner le plateau 2 à une vitesse de rotation prédéfinie, par exemple à une vitesse d'environ 300 tours/min. En même temps, l'unité 27 active l'électro-aimant 36 afin d'amener les moyens d'indexation 32 dans leur position inactive, dans laquelle la plaque de support 14 peut pivoter librement autour de l'axe 22.

Si le plateau 8 n'a pas été chargé de manière uniforme, il apparaît sur celui-ci un balourd B (figure 5), dont il va falloir déterminer la position angulaire et la masse pour que le balourd puisse être compensé par au moins une masse d'équilibrage afin d'équilibrer le plateau 2. Pendant la rotation du plateau 2, le balourd B est soumis à une accélération centrifuge $\vec{\gamma}_c$, dont la composante sur l'axe OY a une valeur donnée par la formule :

$$\gamma_c = \omega^2 \cdot r \cdot \sin(\omega t) \tag{1}$$

Dans laquelle $\omega$ est la pulsation qui est égale à $2\pi f$, f étant la vitesse de rotation du plateau 2 exprimée en hertz ou tours/s, t est le temps en secondes et r est le rayon de giration du balourd B, exprimé en mètres. Pour une centrifugeuse donnée, le rayon r correspond au rayon du plateau 2 et est donc connu, de même que la vitesse de rotation f. Les valeurs de f et r peuvent être stockées dans une mémoire de l'unité de contrôle et de commande 27. L'accélération centrifuge $\overline{\gamma}_c$ engendre une force $F_c$, dont la composante sur l'axe OY a une valeur qui est donnée par la formule :

$$F_c = m_0 \cdot \gamma_c = m_0 \cdot \omega^2 \cdot r \cdot \sin(\omega t) \tag{2}$$

Dans laquelle $m_0$ est la masse inconnue du balourd B. La force $F_c$ est transmise à la plaque de support 14 et à l'ensemble des pièces portées par ladite plaque (plateau 2, cuvette 8, paliers 12 et 13, colonnettes - entretoises 15, moteur 16, poulies crantées 17 et 19, courroie crantée 18, capteur de position 26 et capteur d'accélération 29) dont la masse totale M rapportée au centre du plateau 2 est connue par construction. La valeur de la masse M peut donc être stockée dans une mémoire de l'unité de contrôle et de commande 27. En désignant par $\Gamma_0$ la composante sur l'axe OY de l'accélération subie par la masse M rapportée au centre du plateau, on peut encore écrire :

$$F_c = M \cdot \Gamma_0 \tag{3}$$

A partir des formules (2) et (3), on peut déduire que :

$$F_c = M \cdot \Gamma_0 = m_0 \cdot \omega^2 \cdot r \cdot \sin(\omega t) \tag{4}$$

La composante sur l'axe OY de la force $F_c$ a donc pour effet de faire osciller la plaque de support 14 et, avec elle, le capteur d'accélération 29 de part et d'autre de l'axe OX autour de l'axe vertical 22, comme indiqué par la double flèche 71 dans la figure 5. Une lumière arquée 23a, centrée sur l'axe 22, est prévue dans la plaque 23 pour permettre le débattement du moteur 16 quand la plaque 14 oscille.

Dans le graphique de la figure 6, le diagramme A représente le mouvement du capteur d'accélération 29 en fonction du temps, le diagramme A' représente la vitesse du capteur d'accélération 29 en fonction du temps et le diagramme A" représente l'accélération du capteur d'accélération en fonction du temps et représente aussi la forme d'onde du signal transmis par ledit capteur d'accélération sur la ligne 31 à l'unité de contrôle et de commande 27. Ce signal a une forme d'onde qui est en opposition de phase par rapport à celle du mouvement représenté par le diagramme A. Sa valeur est maximale quand l'amplitude du mouvement est maximale le long de l'axe OY, c'est-à-dire quand $(\omega.t) = (\pi/2)$, soit quand $\sin(\omega.t) = 1$. Cette situation se produit quand le balourd B passe dans une position en correspondance avec l'axe OY au cours de la rotation du plateau 2. Pour déterminer la position angulaire du balourd B sur le plateau 2, l'unité de contrôle et de commande 27 enregistre donc la valeur instantanée du signal fourni le capteur de position 26 au moment où la valeur du signal d'accélération fourni par le capteur de position 29, après conversion analogique/numérique dans l'unité de contrôle et de commande 27, atteint sa valeur maximale.

Plus précisément, le capteur de position 26 est de préférence un capteur du type absolu. La position angulaire de son rotor et par conséquent, la position angulaire du plateau 2 qui est lié au rotor du capteur de position 26 est référencée par rapport à un point fixe désigné par le repère R dans les figures 7, 8, 9 et 11. Ce point fixe est choisi arbitrairement comme origine pour la mesure des angles et, dans l'exemple représenté ici, ce point est situé sur l'axe OY. Le capteur de position 26 divise la circonférence du rotor, donc du plateau 2, en un certain nombre de points, par exemple 360 points numérotés de $P_0$ à $P_{359}$ dans le sens horaire, donnant ainsi une résolution de 1°/point. Bien entendu, si on désire obtenir une résolution plus grande, on peut utiliser un capteur de position divisant la circonférence du plateau 2 en un plus grand nombre de points. Ainsi, dans l'exemple représenté ici, lorsque le point $P_0$ du plateau 2 se trouve en correspondance avec le repère R, le capteur de position 26 fournit sur la ligne 28 un signal ayant une valeur 0 comme montré dans la figure 7. Quand le plateau 2 a tourné d'un angle θ de par exemple 45° comme montré sur la figure 8, le capteur angulaire 26 délivre sur la ligne 28 un signal ayant une valeur de 45 correspondant à la valeur de l'angle θ. Ainsi, toutes les valeurs d'angle transmises par le capteur de position 26 sur la ligne 28 à l'unité de contrôle et de commande 27 correspondent à l'écart angulaire entre le point fixe R et le point $P_0$ du plateau 2, qui est mobile avec ce dernier.

D'après ce qui précède, on voit que si l'unité de contrôle et de commande 27 enregistre dans sa mémoire la valeur qui est présente sur la ligne 28 au moment où le signal d'accélération fourni par le capteur d'accélération 29 atteint une valeur maximale, c'est-à-dire quand le balourd B occupe une position en correspondance avec l'axe OY, l'unité de contrôle et de commande 27 va donc déterminer la position angulaire du balourd B comme étant l'angle $\theta_B$ dont la valeur est présente à ce moment sur la ligne 28, comme montré dans la figure 9. Ensuite, en soustrayant 180° de la valeur $\theta_B$ enregistrée, les moyens de calcul inclus dans l'unité de contrôle et de commande 27 déterminent l'écart angulaire $\theta_E$ entre la position $P_0$ du plateau 2 et la position du point E qui est diamétralement opposé au balourd B et qui est destiné à recevoir une masse d'équilibrage correspondant à la masse $m_0$ du balourd B.

Si on désigne par $\Gamma'_0$ la valeur de l'accélération mesurée par l'unité de contrôle et de commande (27) après conversion analogique/numérique du signal issu du capteur d'accélération (29), $\Gamma'_0$ est lié à $\Gamma_0$ par le formule :

$$\Gamma'_0 = K \cdot \Gamma_0 \qquad\qquad (5)$$

Dans laquelle K est un coefficient d'amplification qui est égal à $L_2/L_1$. En effet, comme cela est notamment visible dans la figure 5, le capteur d'accélération 29 est disposé sur la plaque de support 14 dans une position qui est alignée avec le centre du plateau 2 et avec le centre géométrique 72 de l'axe de pivotement 22, et qui se trouve de préférence à une distance $L_2$ du centre 72 qui est plus grande que la distance $L_1$ du cantre du plateau 2 au centre 72. Cette disposition offre les avantages suivants : elle permet d'amplifier mécaniquement, dans le rapport $L_2/L_1$, les dé-placement, vitesse et accélération du capteur d'accélération 29 par rapport aux déplacement, vitesse et accélération du centre du plateau 2, donc de faire des mesures à une vitesse plus faible que la vitesse de rotation correspondant à la vitesse nominale de centrifugation ; à son tour, cela permet de limiter le déplacement angulaire du plateau 2 et de la plaque de support 14 autour de l'axe 22 à une faible valeur (environ $\pm$ 5°) et, par suite, de considérer leur faible déplacement angulaire au niveau du centre du plateau 2 comme linéaire sur l'axe OY. Enfin, cela permet d'éviter de provoquer des dommages mécaniques qui autrement pourraient se produire pendant les mesures, c'est-à-dire à un moment où le balourd peut être important et n'a pas encore été compensé, si la vitesse de rotation était importante, voir proche de la vitesse nominale de centrifugation.

La valeur $\Gamma'_0$ de l'accélération est elle aussi maximale quand l'amplitude du mouvement du capteur d'accélération 29 est maximale selon l'axe OY, c'est-à-dire quand le balourd B occupe la position représentée sur la figure 9, en regard du repère R. L'unité de contrôle et de commande 27 enregistre dans sa mémoire la valeur maximale de $\Gamma'_0$.

D'après les formules (2), (3) et (5), on peut déduire que la valeur de la masse $m_0$ est égale à :

$$m_0 = \frac{\Gamma'_0}{\gamma_c} \cdot \frac{M}{K} \qquad\qquad (6)$$

D'après la formule (6), on voit que les moyens de calcul inclus dans l'unité de contrôle et de commande 27 peuvent aisément calculer la valeur de la masse $m_0$ du balourd B sur la base de la valeur de l'accélération $\Gamma'_0$ mesurée par le capteur d'accélération 29 et à partir des données de construction M et K qui sont stockées dans la mémoire de ladite unité 27, et à partir de l'accélération centrifuge $\gamma_c$. La valeur de $\gamma_c$ peut être ou bien stockée dans ladite mémoire, ou bien calculée selon la formule (1), à partir de la valeur du rayon de giration r, qui est stockée dans ladite mémoire, et à partir de la valeur de la pulsation $\omega$ correspondant à la vitesse de rotation prédéfinie pour la détermination du balourd (par exemple 300 tours/min) qui est elle aussi ou bien stockée dans ladite mémoire ou bien calculable à partir d'un signal de vitesse fourni par un tachymètre non montré.

La position du point E qui est diamétralement opposé au balourd B sur le plateau 2 et qui est destiné à recevoir une masse d'équilibrage, et la masse $m_0$ du balourd à compenser ayant été déterminées de la manière décrite plus haut, l'équilibrage du plateau 2 peut ensuite être effectué en plaçant au point E une masse d'équilibrage $m_1$ tel que $m_1 = m_0$. La masse d'équilibrage $m_1$ peut être placée sous la forme d'une quantité appropriée de liquide dans au moins un conteneur d'équilibrage 6 à l'aide du dispositif d'approvisionnement 21 décrit plus haut. Pour cela, l'unité de contrôle et de commande 27 vérifie si la position angulaire déterminée pour le point E correspond à l'une des positions angulaires définies et connues des conteneurs d'équilibrage 6, qui sont stockées dans la mémoire de ladite unité 27. Si le résultat de cette vérification est positif, l'unité 27 adopte comme position angulaire pour la masse d'équilibrage la position angulaire qui avait été déterminée pour le point E, sinon elle adopte la position angulaire du conteneur d'équilibrage qui est la plus proche de ladite position angulaire déterminée pour le point E. A titre de variante, l'unité 27 peut adopter comme position angulaire pour la masse d'équilibrage au moins deux positions angulaires correspondant à au moins deux conteneurs d'équilibrage 6 qui sont situés de part et d'autre de la position angulaire déterminée pour le point E.

L'unité 27 vérifie également si la valeur de la masse $m_0$ du balourd, donc la valeur de la masse d'équilibrage $m_1$ est inférieure ou égale à une masse maximale admissible de liquide dans un conteneur d'équilibrage 6. Si le résultat de cette seconde vérification est positif et si le résultat de la première vérification est lui même positif, l'unité 27 va alors commander le moteur 16 pour faire tourner le plateau 2 à vitesse réduite et pour amener le conteneur d'équilibrage 6 approprié jusqu'au poste fixe où se trouve le dispositif d'approvisionnement 21, afin de remplir ledit conteneur d'équilibrage approprié avec une masse de liquide $m_1$ égale à la masse précédemment calculée $m_0$ du balourd B. Si le résultat de la seconde vérification est négatif, c'est-à-dire si la masse calculée $m_0$ est supérieure à la masse maximale admissible de liquide pour un conteneur d'équilibrage, l'unité 27 va fractionner ou diviser la valeur de la masse d'équilibrage $m_1$ en au moins deux masses d'équilibrage ayant chacune une valeur inférieure à la masse maximale admissible de liquide, et l'unité 27 va en outre adopter comme position angulaire pour les au moins deux masses d'équilibrage, au moins deux positions angulaires correspondant à au moins deux conteneurs d'équilibrage ayant des positions définies situées de part et d'autre de la position angulaire déterminée pour le point E. Dans ce dernier cas, les valeurs des masses d'équilibrage correspondant à des fractions de la masse déterminée $m_0$ du balourd B et les positions pour lesdites masses d'équilibrage sont calculées par l'unité 27 de telle façon que la somme vectorielle des forces centrifuges dues aux dites masses d'équilibrage calculées, une fois placées dans les conteneurs d'équilibrage situés dans les positions angulaires adoptées, équilibre la force centrifuge due à la masse $m_0$ du balourd B.

L'ordre dans lequel sont effectuées les deux vérifications susmentionnées n'est pas important. L'unité 27 pourrait donc, sans sortir du cadre de l'invention, vérifier tout d'abord si la valeur calculée de la masse $m_0$ du balourd B, donc la valeur de la masse d'équilibrage $m_1$ est inférieure ou égale à la masse maximale admissible de liquide pour un conteneur d'équilibrage, et vérifier ensuite si la position angulaire déterminée pour le point E correspond à une des positions angulaires définies des conteneurs l'équilibrage 6.

Dans le cas où au moins deux conteneurs d'équilibrage 6 doivent être remplis avec des masses déterminées de liquide pour équilibrer la masse $m_0$ du balourd B, l'unité de commande 27 active le moteur 16 de manière à amener les conteneurs d'équilibrage 6 appropriés à vitesse réduite successivement au poste fixe où se trouve le dispositif d'approvisionnement 21, afin de remplir l'un après l'autre les conteneurs appropriés d'équilibrage 6 respectivement avec les quantités appropriées de liquide calculées par l'unité 27.

Pour amener le conteneur d'équilibrage approprié 6 en correspondance avec le dispositif d'approvisionnement 21, l'unité 27 se base sur le signal fourni par le capteur de position 26 de la manière suivante. Pour simplifier, on supposera que dans la position angulaire déterminée pour le point E il y a effectivement un conteneur d'équilibrage 6 et que le conteneur d'équilibrage correspondant au point E doit être amené en regard du dispositif d'approvisionnement 21 comme montré dans la figure 11. Si on désigne par $\alpha$ l'écart angulaire entre la position fixe correspondant au repère R et la position fixe correspondant au dispositif d'approvisionnement 21 et si on désigne par $\theta$ la position angulaire du plateau 2 située en regard du repère R quand le point E occupe la position recherchée par rapport au dispositif d'approvisionnement 21, c'est-à-dire une position en regard de ce dernier, on voit d'après la figure 11 que l'écart angulaire $\theta_E$ entre la position angulaire $P_0$ et la position angulaire du point E sur le plateau 2 est donnée par :

$$\theta_E = \alpha + \theta \qquad\qquad\qquad (7)$$

Or, d'après la figure 9, on voit que l'écart angulaire $\theta_E$ calculé par l'unité 27 sur la base de la position angulaire $\theta_B$ qui a été déterminée pour le balourd B, l'écart angulaire $\theta_E$ est aussi donné par la formule :

$$\theta_E = \theta_B - 180° \qquad\qquad\qquad (8)$$

D'après les formules (7) et (8), on voit que la valeur de l'angle $\theta$ correspondant à la position angulaire du plateau (2) qui doit se trouver en regard du repère R quand le point E occupe la position recherchée en regard du dispositif d'approvisionnement 21, donc la valeur du signal délivré à ce moment par le capteur de position 26 sur la ligne 28, est donnée par la formule :

$$\theta = \theta_B - 180° - \alpha \qquad (9)$$

Par exemple, si, par construction, l'angle $\alpha$ est égal à 45° et si la valeur de l'angle $\theta_B$ enregistrée dans la mémoire de l'unité 27 lors de la détermination de la position du balourd B est égale à 235° (figure 9), la valeur de l'angle $\theta$ est alors égale à 10°, modulo 360° (une correction est en effet nécessaire si, dans l'exemple ci-dessus où $\alpha$ est égal à 45°, la valeur de $\theta_B$ est dans la plage de [0°, 225°], bornes comprises).

Pour amener le point E en correspondance avec le dispositif d'approvisionnement 21, l'unité de contrôle et de commande 27 doit donc faire tourner le plateau 2 à vitesse réduite et arrêter celui-ci au moment où le signal fourni par le capteur de position 26 sur la ligne 28 est égal à l'angle $\theta$, soit 10° dans l'exemple numérique susmentionné.

Le procédé décrit plus haut pour déterminer la masse $m_0$ du balourd B, donc la masse d'équilibrage $m_1$ devant être placée au point E qui est diamétralement opposé au balourd B sur le plateau 2, suppose néanmoins une approximation, à savoir que la masse des échantillons contenus dans les tubes 4 installés dans les porte-tube 3 est négligeable par rapport à la masse du plateau 2, de la plaque de support 14, du moteur 16 et des autres pièces de la centrifugeuse portées par la plaque de support 14. En effet, la masse des échantillons n'est en principe pas connue et la valeur de la masse M stockée dans la mémoire de l'unité 27 correspond seulement à la masse totale de la plaque de support 14 et de toutes les pièces de la centrifugeuse portées par ladite plaque 14. Si l'on veut obtenir une précision encore plus grande, on peut prévoir sur la centrifugeuse ou à côté de celle-ci un dispositif électronique de pesée permettant de peser les tubes à échantillon, remplis chacun d'un échantillon, avant qu'ils ne soient placés dans les porte-tube 3 du plateau 2, et la valeur de la pesée ainsi obtenue peut être introduite dans la mémoire de l'unité 27, par exemple par une saisie manuelle au moyen d'un clavier ou par un transfert direct à partir du dispositif de pesée, pour être ensuite additionnée à la masse M.

Toutefois, dans un autre mode de réalisation du procédé selon l'invention, le processus d'équilibrage peut être effectué en deux phases. Dans une première phase, la masse $m_0$ du balourd B et la position angulaire de celui-ci sont déterminées de la manière décrite plus haut et une masse d'équilibrage $m_1$ est placée dans le ou les conteneur(s) d'équilibrage correspondant à la ou les position(s) déterminée(s) par l'unité 27 pour la ou les masse(s) d'équilibrage (par exemple au point E). Ensuite, le plateau 2 est à nouveau mis en rotation à la vitesse de rotation prédéfinie pour le processus d'équilibrage et si la compensation effectuée lors de la première phase n'est pas suffisante, c'est-à-dire que si, après la première compensation pour la masse $m_1$, il apparaît un nouveau balourd et que celui-ci est encore trop important par rapport à une plage de tolérance définie à l'avance et mise en mémoire dans l'unité 27, une deuxième phase d'équilibrage est alors lancée automatiquement. Cette deuxième phase d'équilibrage tient des comptes des résultats acquis lors de la première phase. Il est donc possible de faire alors une compensation qui ne nécessite aucune approximation dans les calculs.

Si un nouveau balourd apparaît après compensation par la masse d'équilibrage $m_1$, la plaque de support 14 est soumise à un nouveau mouvement sinusoïdal suivant l'axe OY, qui est engendré par la combinaison des deux forces centrifuges dues à la masse $m_0$ du balourd original B et à la masse d'équilibrage $m_1$, et qui obéit à l'équation :

$$\overrightarrow{(M + m_1) \cdot \Gamma_1} = \overrightarrow{m_0 \cdot \gamma_c \cdot \sin(\omega t)} + \overrightarrow{m_1 \cdot \gamma_c \cdot \sin(\omega t)} \qquad (10)$$

Dans laquelle $\Gamma_1$ est l'accélération rapportée au centre du plateau 2 et subie par l'ensemble comprenant la plaque de support 14 et toutes les pièces portées par ladite plaque, y compris les tubes à échantillon et la masse d'équilibrage $m_1$. L'accélération $\Gamma_1$ est mesurée au moyen du capteur d'accélération 29 et, de la même façon que pour la première phase d'équilibrage, la nouvelle valeur $\Gamma'_1$ fournie par le capteur d'accélération 29 est enregistrée dans la mémoire de l'unité de contrôle et de commande 27 quand $\omega t = \pi/2$, soit quand $\sin(\omega t) = 1$. On notera là encore que $\Gamma_1$ et $\Gamma'_1$ sont liés par une relation semblable à celle de l'équation (5) c'est-à-dire que :

$$\Gamma'_1 = K \cdot \Gamma_1 \qquad (11)$$

Les vecteurs $\overrightarrow{m_0 \cdot \gamma_c}$ et $\overrightarrow{m_1 \cdot \gamma_c}$ étant de directions opposées puisque les masses $m_0$ et $m_1$ se trouvent dans des positions diamétralement opposées sur le plateau 2, les modules de ces deux vecteurs ont des signes opposés. En conséquence, l'équation (10) peut encore s'écrire :

$$(M + m_1) \cdot \Gamma_1 = m_0 \cdot \gamma_c - m_1 \cdot \gamma_c \qquad (12)$$

En remplaçant $\Gamma_1$ par sa valeur tirée de l'équation (11) et en remplaçant M par sa valeur tirée de l'équation (6), l'équation (12) devient :

$$\left(K \cdot m_0 \cdot \frac{\gamma_c}{\Gamma'_0} + m_1\right)\frac{\Gamma'_1}{K} = m_0 \cdot \gamma_c - m_1 \cdot \gamma_c \qquad (13)$$

De l'équation (13), on peut tirer la valeur de $m_0$ :

$$m_0 = \frac{m_1}{K} \cdot \frac{\Gamma'_0}{\gamma_c} \cdot \frac{K\gamma_c + \Gamma'_1}{\Gamma'_0 - \Gamma'_1} \qquad (14)$$

Comme les valeurs de $m_1$, K, $\Gamma'_0$, $\Gamma'_1$ et $\gamma_c$ ont été précédemment enregistrées dans la mémoire de l'unité de contrôle et de commande 27 et sont donc connues, ladite unité 27 peut donc maintenant calculer la valeur réelle de la masse $m_0$ du balourd initial B et, par suite, calculer aussi la masse supplémentaire $m_2 = m_0 - m_1$ qu'il convient d'ajouter à la masse d'équilibrage $m_1$ précédemment placée sur le plateau 2 afin d'équilibrer complètement celui-ci.

Il va de soi que les modes de réalisation l'invention qui ont été décrits ci-dessus ont été donnés à titre d'exemple purement indicatif et nullement limitatif, et que de nombreuses modifications peuvent être apportées par l'homme de l'art sans pour autant sortir du cadre de l'invention.

## Revendications

1. Procédé pour équilibrer un plateau rotatif (2) d'une centrifugeuse comportant un capteur de position (26) apte à fournir un signal indicatif d'une position angulaire du plateau rotatif, et plusieurs porte - tube (3) qui sont situés dans des positions angulaires définies à la périphérie du plateau rotatif et qui ont chacun des moyens aptes à recevoir un tube à échantillon (4), **caractérisé en ce qu'**il comprend les étapes consistant :

   a) à utiliser comme porte-tube, des porte-tube (3) ayant chacun un conteneur (6) d'équilibrage en plus desdits moyens aptes à recevoir un tube à échantillon ;
   b) à charger au moins un certain nombre desdits porte-tube (3) chacun avec un tube à échantillon (4) rempli d'un échantillon de liquide à centrifuger ;
   c) à faire tourner le plateau rotatif (2) à une vitesse de rotation prédéfinie ;
   d) à déterminer, sur la base de ladite vitesse de rotation prédéfinie et sur la base du signal fourni par le capteur de position (26) et d'un signal fourni par un capteur d'accélération (29) couplé au plateau rotatif (2), une position angulaire ($\theta_B$) et une masse ($m_0$) d'un balourd (B) sur le plateau rotatif, dû à un chargement inégal dudit plateau rotatif ;
   e) à déterminer, sur la base de la position angulaire ($\theta_B$) du balourd (B) déterminée à l'étape d), au moins une position angulaire ($\theta_E$) sur le plateau rotatif (2) pour au moins une masse d'équilibrage ($m_1$) ;
   f) à réduire la vitesse du plateau rotatif (2) et à l'amener par une rotation lente jusqu'à une position d'arrêt telle que la position angulaire déterminée à l'étape e) se trouve en correspondance avec un poste fixe (21) d'approvisionnement en produit d'équilibrage; et
   g) à remplir celui des conteneurs d'équilibrage (6) qui se trouve au poste fixe d'approvisionnement quand le plateau rotatif est dans ladite position d'arrêt, avec une quantité de produit d'équilibrage ayant une masse égale à au moins une fraction de la masse ($m_0$) du balourd (B) déterminée à l'étape d).

2. Procédé selon la revendication 1, **caractérisé en ce que** l'étape e) consiste :

   e1) à calculer la position angulaire qui est diamétralement opposée, sur le plateau rotatif (2), à la position angulaire du balourd (B) déterminée à l'étape d) ;

e2) à vérifier si la position angulaire calculée à l'étape e1) correspond à une desdites positions angulaires définies des porte-tube (3) et du conteneur d'équilibrage (6) y associé et, dans l'affirmative, à adopter comme position angulaire pour la masse d'équilibrage ($m_1$) la position angulaire calculée à l'étape e1), sinon, à adopter comme position angulaire pour la masse d'équilibrage ($m_1$) la position angulaire du porte-tube et du conteneur d'équilibrage (6) y associé qui est la plus proche de la position angulaire calculée à l'étape e1).

**3.** Procédé selon la revendication 1, **caractérisé en ce que** l'étape e) consiste :

e1) à calculer la position angulaire qui est diamétralement opposée, sur le plateau rotatif (2), à la position angulaire du balourd (B) déterminée à l'étape d) ;

e2) à vérifier si la position angulaire calculée à l'étape e1) correspond à une desdites positions angulaires définies des porte-tube (3) et du conteneur d'équilibrage (6) y associé et, dans l'affirmative, à adopter comme position angulaire pour la masse d'équilibrage ($m_1$) la position angulaire calculée à l'étape e1), sinon, à adopter comme positions angulaires pour au moins deux masses d'équilibrage au moins deux positions angulaires correspondant à au moins deux des porte-tube (3) et aux conteneurs d'équilibrage (6) y associés qui sont situés de part et d'autre de la position angulaire calculée à l'étape e1), et à calculer au moins deux masses d'équilibrage devant être placées respectivement dans les conteneurs d'équilibrage correspondant aux positions angulaires adoptées, lesdites masses d'équilibrage calculées correspondant à des fractions de la masse du balourd déterminée à l'étape d) telles que la somme vectorielle des forces centrifuges dues aux masses d'équilibrage calculées une fois placées dans les conteneurs d'équilibrage situés dans lesdites positions angulaires adoptées, équilibre la force centrifuge due à la masse du balourd.

**4.** Centrifugeuse comprenant :

a) un bâti (1)

b) un plateau (2) monté rotatif sur le bâti et ayant plusieurs porte-tube (3) situés dans des positions angulaires définies sur la périphérie du plateau rotatif, chaque porte-tube étant apte à recevoir un tube à échantillon (4) ;

c) des moyens d'entraînement (16-19) pour faire tourner le plateau rotatif ;

d) un capteur de position (26) apte à fournir un signal indicatif d'une position angulaire du plateau rotatif ;

e) une unité de contrôle et de commande (27) recevant ledit signal indicatif de position angulaire et apte à commander lesdits moyens d'entraînement (16-19) de manière à faire tourner ledit plateau rotatif (2) à au moins une vitesse de rotation prédéfinie et à arrêter ledit plateau rotatif dans des positions angulaires déterminées ;

**caractérisée par**

f) plusieurs conteneurs d'équilibrage (6) qui sont respectivement adjoints aux porte-tube (3) sur le plateau rotatif (2) ;

g) un capteur d'accélération (29) apte à fournir un signal indicatif de la valeur de l'accélération centrifuge à laquelle le plateau rotatif (2) est soumis quand il tourne à une vitesse prédéfinie ;

h) un dispositif (21) d'approvisionnement en produit d'équilibrage situé sur le bâti (1) à un poste adjacent à la périphérie du plateau rotatif (2) ;

i) des moyens de calcul inclus dans l'unité de contrôle et de commande (27), aptes à déterminer, sur la base de ladite vitesse de rotation prédéfinie et sur la base des signaux fournis par le capteur de position et le capteur d'accélération, une position angulaire ($\theta_B$) et une masse ($m_0$) d'un balourd (B) sur le plateau rotatif (2), dû à un chargement inégal dudit plateau rotatif ;

j) lesdits moyens de calcul étant aptes à déterminer, sur la base de la position angulaire ($\theta_B$) déterminée du balourd (B), au moins une position angulaire ($\theta_E$) sur le plateau rotatif (2) pour au moins une masse d'équilibrage ($m_1$) ;

k) ladite unité de contrôle et de commande (27) étant apte à commander lesdits moyens d'entraînement (16-19) pour que ceux-ci amènent le plateau rotatif (2) dans une position d'arrêt telle que la position angulaire déterminée pour la masse d'équilibrage ($m_1$) se trouve en correspondance avec ledit poste fixe, et à commander ledit dispositif (21) d'approvisionnement en produit d'équilibrage pour remplir celui des conteneurs d'équilibrage (6) qui se trouve au poste fixe quand le plateau rotatif (2) est dans ladite position d'arrêt, avec une quantité de produit d'équilibrage ayant une masse égale à au moins une fraction de la masse ($m_0$) du balourd (B) déterminée par les moyens de calcul.

**5.** Centrifugeuse selon la revendication 4, **caractérisée en ce que** ledit plateau rotatif (2), ledit capteur de position (26), ledit capteur d'accélération (29) et lesdits moyens d'entraînement (16-19) sont portés par un support mobile (14) qui est monté pivotant par rapport au bâti (1) autour d'un axe vertical de pivotement (22) parallèle à l'axe de rotation (11) du plateau rotatif et qui est apte à osciller de part et d'autre d'une position neutre quand le plateau rotatif tourne à ladite vitesse prédéfinie avec un chargement inégal.

6. Centrifugeuse selon la revendication 5, **caractérisée en ce que** l'axe de rotation (11) du plateau rotatif (2) est situé à une première distance (L1) de l'axe vertical de pivotement (22), et le capteur d'accélération est situé à une seconde distance (L2) dudit axe vertical de pivotement (22) dans un plan vertical défini par ledit axe vertical de pivotement et par ledit axe de rotation, ladite seconde distance (L2) étant plus grande que ladite première distance (L1).

7. Centrifugeuse selon la revendication 6, **caractérisée en ce que** lesdits moyens de calcul calculent la masse ($m_0$) du balourd (B) d'après une première formule :

$$m_0 \quad = \frac{\Gamma'_0}{\gamma_c} \cdot \frac{M}{K}$$

dans laquelle $\Gamma'_0$ est une valeur d'accélération mesurée par le capteur d'accélération (29), K est un coefficient d'amplification dont la valeur est égale au rapport (L2/L1) desdites seconde et première distances, M est la masse totale du support mobile (14) et de toutes les pièces de la centrifugeuse portées par ledit support mobile ; et $\gamma_c$ est la valeur de l'accélération centrifuge due à la masse $m_0$ du balourd (B) quand le plateau rotatif (2) tourne à la vitesse de rotation prédéfinie.

8. Centrifugeuse selon la revendication 7, **caractérisée en ce que** les moyens de calcul recalculent la masse $m_0$ du balourd (B) d'après une seconde formule :

$$m_0 = \frac{m_1}{K} \cdot \frac{\Gamma'_0}{\gamma_c} \cdot \frac{\Gamma'_1 + K\gamma_c}{\Gamma'_0 - \Gamma'_1}$$

dans laquelle $m_1$ est une première masse d'équilibrage calculée d'après la première formule et $\Gamma_1'$ est une valeur d'accélération mesuré par le capteur d'accélération (29) quand le plateau rotatif (2) munie de la première masse d'équilibrage est entraîné en rotation à la vitesse de rotation prédéfinie, et les moyens de calcul calculent ensuite une seconde masse d'équilibrage $m_2 = m_0 - m_1$, à partir de la seconde formule afin de compléter l'équilibrage du plateau rotatif.

9. Centrifugeuse selon l'une quelconque des revendications 5 à 8, **caractérisée en ce qu'**elle comprend des moyens d'indexation (32) débrayables qui sont commandés par l'unité de contrôle et de commande (27) de façon à maintenir ledit support mobile (14) dans ladite position neutre quand le plateau rotatif (2) est à l'arrêt et quand il tourne à une vitesse nettement plus petite que ladite vitesse de rotation prédéfinie.

10. Centrifugeuse selon l'une quelconque des revendications 4 à 9, **caractérisée en ce que** le produit d'équilibrage est un liquide (69).

11. Centrifugeuse selon la revendication 10, **caractérisée en ce que** le dispositif (21) d'approvisionnement en produit d'équilibrage comprend

a) au poste fixe, une aiguille verticale creuse de remplissage et de vidange (41) et un mécanisme de montée et de descente (61), commandé par l'unité de contrôle et de commande (27), pour déplacer verticalement ladite aiguille (41) entre une position haute d'attente, dans laquelle l'extrémité inférieure de l'aiguille est à un niveau plus haut qu'une ouverture supérieure du conteneur d'équilibrage (6) à remplir, et au moins une position basse de remplissage/vidange dans laquelle l'aiguille (41) est engagée dans ledit conteneur d'équilibrage (6) à remplir ou à vider ;
b) un réservoir (42) de liquide d'équilibrage ; et
c) une pompe (43) reliée audit réservoir (42) de liquide d'équilibrage et à ladite aiguille (41) par des tuyaux souples (44-48) et par une électrovanne (49) commandée par l'unité de contrôle et de commande (27), ladite électrovanne ayant une position neutre d'attente, une première position de travail dans laquelle le liquide d'équilibrage peut circuler du réservoir (42) vers l'aiguille (41), et une seconde position de travail dans laquelle le liquide d'équilibrage peut circuler de l'aiguille (41) vers le réservoir (42).

12. Centrifugeuse selon la revendication 11, **caractérisée en ce qu'**elle comprend en outre un détecteur de niveau de liquide (63) agencé pour détecter un niveau de liquide dans un conteneur d'équilibrage (6) situé audit poste fixe et pour fournir un signal indicatif du niveau détecté de liquide utilisable par l'unité de contrôle et de commande (27) pour commander la pompe (43) et/ou l'électrovanne (49).

**Claims**

1. Method to balance a rotatable plate (2) of a centrifuge including a position detector (26) adapted to provide a signal indicative of an angular position of the rotatable plate, and several tube carriers (3) located in defined angular positions about the periphery of the rotatable plate, each tube carrier having means adapted to receive a sample tube (4), **characterized by** comprising the steps consisting:

   a) in using as tube carrier, tube carriers (3) each having a balancing container (6) in addition to said means adapted to receive a sample tube;
   b) in loading at least a certain number of said tube carriers (3), each with a sample tube (4) filled with a sample of liquid to be centrifuged;
   c) in rotating the rotatable plate (2) at a predetermined speed of rotation;
   d) in determining, on the basis of said predetermined speed of rotation and on the basis of signal supplied by position detector (26) and of a signal supplied by an acceleration detector (29) coupled to rotatable plate, an angular position ($\theta_B$) and a mass ($m_0$) of an unbalance (B) on rotatable plate, due to unequal loading of said rotatable plate;
   e) in determining, based on the angular position ($\theta_B$) of unbalance (B) determined in step d), at least one angular position ($\theta_E$) on rotatable plate (2) for at least one balancing mass ($m_1$);
   f) in reducing speed of rotating plate (2) and bringing it by one slow rotation to a stop position such that angular position determined in step e) is located in correspondence with a fixed station (21) for supplying a balance product; and
   g) in filling the balancing container (6) which is located at fixed supply station when rotatable plate is in said stop position, with a quantity of balancing product having a mass equal to at least a fraction of the mass ($m_0$) of unbalance (B) determined in step d).

2. Method according to claim 1, **characterized in that** step e) consists:

   e1) in computing the angular position which is diametrically opposed, on rotatable plate (2), to the angular position of unbalance (B) determined in step d);
   e2) in verifying whether the angular position calculated in step e1) corresponds with one of said defined angular positions of tube carriers (3) and of balancing container (6) associated therewith and, if yes, in adopting as angular position for the balancing mass ($m_1$), the angular position calculated in step e1), and if not, in adopting as angular position for the balancing mass ($m_1$) the angular position of the tube carrier and of the balancing container (6) associated therewith which is nearest the angular position calculated in step e1).

3. Method according to claim 1, **characterized in that** step e) consists:

   e1) in computing the angular position which is diametrically opposite, on rotating plate (2), the angular position of unbalance (B) determined in step d)
   e2) in verifying whether the angular position calculated in step e1) corresponds with one of said defined angular positions of tube carriers (3) and of balancing container (6) associated therewith and, if yes, in adopting as angular position for the balancing mass ($m_1$), the angular position calculated in step e1), and if not, in adopting as angular positions for at least two balancing masses, at least two angular positions corresponding with at least two of the tube carriers (3) and with the balancing containers (6) associated therewith which are located on opposite sides of the angular position calculated in step e1), and in calculating at least two balancing masses to be placed respectively in the balancing containers corresponding with the adopted angular positions, said calculated balancing masses corresponding with fractions of the unbalance mass determined in step d), such that the vectorial sum of centrifugal forces due to calculated balancing masses once placed in the balancing containers located in said adopted angular positions, balances the centrifugal force due to the unbalance mass;

4. Centrifuge comprising

   a) a frame (1)
   b) a plate (2) rotatably mounted on the frame and having several tube carriers (3) located in defined angular postions about the periphery of rotatable plate, each tube carrier being adapted to receive a specimen tube (4);
   c) driving means (16-19) to rotate the rotatable plate;
   d) a position detector (26) adapted to provide a signal indicative of an angular position of the rotatable plate;
   e) a monitoring and control unit (27) receiving said signal indicative of angular position and adapted to control said driving means (16-19) so as to rotate the rotatable plate (2) at least at a predetermined speed of rotation and to stop said rotatable plate in predetermined angular positions; **characterized by** :
   f) several balancing containers (6) which are respectively joined to the tube carriers (3) on rotatable plate (2);
   g) an acceleration detector (29) adapted to supply a signal indicative of the value of centrifugal acceleration to which rotatable plate (2) is subject when it rotates at a predetermined speed;
   h) a device (21) for supplying a balancing product located on the frame (1) at a station adjacent the periphery of rotatable plate (2);
   i) calculating means included in monitoring and control unit 27), adapted to determine, on the basis of said predetermined speed of rotation and on the basis of signals provided by the position detector and the acceleration detector, an angular position ($\theta_B$) and a mass ($m_0$) of an unbalance (B) on rotatable plate (2), due to unequal loading of said rotatable plate;
   j) said calculating means being adapted to determine, on the basis of the determined angular position ($\theta_B$) of unbalance (B), at least one angular position ($\theta_E$) on the rotatable plate (2) for at least one balancing mass ($m_1$);
   k) said monitoring and control unit (27) being adapted to control said driving means (16-19) in order to they bring the rotatable plate (2) to a stop position such that the determined angular position for the balancing mass ($m_1$) be located in correspondence with said fixed station, and to control said device (21) for supplying a balancing product in order to fill the one of the balancing containers (6) which is located in the fixed station when the rotatable plate (2) is in said stop position, with a quantity of balancing product having a mass equal to at least a fraction of the mass ($m_0$) of unbalance (B) determined by the calculating means.

5. Centrifuge according to claim 4, **characterized in that** said rotatable plate (2), said position detector (26), said acceleration detector (29) and said driving means (16-19) are carried by a movable support (14) which is mounted pivoting with resprect to frame (1) about a vertical pivot axis parallel with the axis of rotation (11) of the rotatable plate and which is adapted to oscillate on both sides of a neutral position when the rotatable plate rotates at said predetermined speed with an unequal load.

6. Centrifuge according to claim 5, **characterized in that** the axis of rotation (11) of rotatable plate (2) is located at a first distance (L1) from the vertical pivot axis (22), and the acceleration detector is located at a second distance (L2) from said vertical pivot axis (22) in a vertical plane defined by said vertical pivot axis and by said axis of rotation, said second distance (L2) being greater than said first distance (L1).

7. Centrifuge according to claim 6 **characterized in that** said calculating means calculate the mass ($m_0$) of the unbalance (B) according to a first formula :

$$m_0 = \frac{\Gamma'_0}{\gamma_c} \cdot \frac{M}{K}$$

in which $\Gamma'_0$ is an acceleration value measured by the acceleration detector (29) coefficient of amplification whose value is equal to ratio (L2/L1) of said second and first distances, M is the total mass of the movable support (14) and of all pieces of the centrifuge carried by said movable support; and $\gamma_c$ is the value of centrifugal acceleration due to the mass $m_0$ of the unbalance (B) when the rotatable plate (2) rotates at the predetermined speed of rotation.

8. Centrifuge according to the claim 7 **characterized in that** calculating means recalculate the mass $m_0$ of the unbalance (B) according to a second formula :

$$m_0 = \frac{m_1}{K} \bullet \frac{\Gamma'_0}{\gamma_c} \bullet \frac{\Gamma'_1 + \gamma_c \bullet K}{\Gamma'_0 - \Gamma'_1}$$

in which $m_1$ is a first balancing mass calculated according to the first formula and $\Gamma'_1$ is a value of acceleration measured by acceleration detector (29) when rotatable plate (2) provided with first balancing mass is driven in rotation at the predetermined speed of rotation, and calculating means then calculate a second balancing mass $m_2$ = $m_0$ - $m_1$, from the second formula in order to complete the balancing of rotatable plate.

**9.** Centrifuge according to anyone of claims 5 to 8, **characterized by** comprising disengageable indexing means (32) which are controlled by monitoring and control unit (27) in order to maintain said movable support (14) in said neutral position when rotatable plate (2) is stopped and when it rotates at a speed substantially slower than said predetermined speed of rotation;

**10.** Centrifuge according to anyone of claims 4 to 9 **characterized in that** the product of balancing is a liquid (69).

**11.** Centrifuge according to claim 10 **characterized in that** the device for supplying a balancing product comprises /

a) at the fixed station, a vertical hollow filling and emptying needle (41) and a mechanism (61) for going up and down, controlled by the monitoring and control unit (27), to move said needle (41) vertically between an upper ready position, in which the lower end of the needle is at a level higher than an upper opening of the balancing container (6) to be filled, and at least one lower filling/emptying position in which the needle (41) is engaged in said balancing container (6) to be filled or emptied ;
b) a tank (42) of balancing liquid; and
c) a pump (43) connected to said tank (42) of balancing liquid and to said needle (41) by flexible tubes (44-48) and by an electrovalve (49) controlled by monitoring and control unit (27), said electrovalve having a neutral ready position, a first working position in which the balancing liquid can circulate from the tank (42) toward the needle (41) and a second working position in which the balancing liquid can circulate from the needle (41) toward the tank (42).

**12.** Centrifuge according to claim 11 **characterized in that** it comprises moreover a detector (63) for the liquid level arranged to detect a liquid level in the balancing container (6) located at said fixed station and to supply a signal indicative of the detected liquid level usable by the monitoring and control unit (27) to control the pump (43) and/or the electrovalve (49).

**Patentansprüche**

**1.** Verfahren zum Auswuchten einer Drehschreibe (2) einer Zentrifuge, mit einem Positionsgeber (26) zur Lieferung eines Signals, das eine Winkelstellung der Drehscheibe anzeigt, und mehreren Röhrenträgern (3), die in definierten Winkelpositionen am Umfang der Drehscheibe angeordnet sind und jeweils Mittel zur Aufnahme einer Probenröhre (4) aufweisen, *gekennzeichnet durch* die Schritte:

a) Verwendung von Röhrenträgern (3), von denen jeder zusätzlich zu den Mitteln zur Aufnahme einer Probenröhre einen Auswuchtbehälter (6) aufweist;
b) Beladung mindestens einiger der Röhrenträger (3) mit je einer Probenröhre (4), die mit einer Probe der zu zentrifugierenden Flüssigkeit gefüllt ist;
c) Drehen der Drehscheibe (2) mit einer vorgegebenen Drehgeschwindigkeit;
d) anhand der vorgegebenen Drehgeschwindigkeit und des von dem Positionsgeber (26) gelieferten Signals und eines Signals, das von einem mit der Drehscheibe (2) gekoppelten Beschleunigungssensor (29) geliefert wird, Bestimmen einer Winkelposition ($\theta_B$) und einer Masse ($m_0$) einer Unwucht (B) auf der Drehscheibe, die auf einer ungleichmäßigen Beladung der Drehscheibe beruht;
e) anhand der im Schritt d) bestimmten Winkelposition ($\theta_B$) der Unwucht (B) Bestimmen mindestens einer Winkelposition ($\theta_E$) auf der Drehscheibe (2) für mindestens eine Auswuchtmasse ($m_1$);

f) Herabsetzen der Geschwindigkeit der Drehscheibe (2) und Bringen derselben mit langsamer Drehung bis in eine Halteposition derart, dass die im Schritt e) bestimmte Winkelposition sich in Übereinstimmung mit einer ortsfesten Station (21) für die Zuführung eines Auswuchtmediums befindet; und

g) Füllen desjenigen Auswuchtbehälters (6), der sich an der ortsfesten Zuführstation befindet, wenn die Drehscheibe in der Halteposition ist, mit einer Menge des Auswuchtmediums, dessen Masse gleich mindestens einem Bruchteil der im Schritt d) bestimmten Masse ($m_0$) der Unwucht (B) ist.

**2.** Verfahren nach Anspruch 1, *dadurch gekennzeichnet,* **dass** der Schritt e) besteht aus:

e1) Berechnung der Winkelposition auf der Drehscheibe (2), die der in Schritt d) bestimmten Winkelposition der Unwucht (B) diametral gegenüber liegt;

e2) Überprüfung, ob die im Schritt e1) berechnete Winkelposition einer der definierten Winkelpositionen der Röhrenträger (3) und des ihnen zugeordneten Auswuchtbehälters (6) entspricht und, wenn dies der Fall ist, Verwendung der im Schritt e1) berechneten Winkelposition als Winkelposition für die Auswuchtmasse ($m_1$), und wenn dies nicht der Fall ist. Verwendung der Winkelposition des Röhrenträgers und des ihm zugeordneten Auswuchtbehälters (6), die der im Schritt e1) berechneten Winkelposition am nächsten liegt, als Winkelposition für die Auswuchtmasse ($m_1$).

**3.** Verfahren nach Anspruch 1, *dadurch gekennzeichnet,* **dass** der Schritt e) besteht aus:

e1) Berechnung der Winkelposition auf der Drehscheibe (2), die der im Schritt d) bestimmten Winkelposition der Unwucht (B) diametral gegenüber liegt;

e2) Überprüfung, ob die im Schritt e1) berechnete Winkelposition einer der definierten Winkelpositionen der Röhrenträger (3) und des ihnen zugeordneten Auswuchtbehälters (6) entspricht und, wenn dies der Fall ist, Verwendung der im Schritt e1) berechneten Winkelposition als Winkelposition für die Auswuchtmasse ($m_1$), und wenn dies nicht der Fall ist, Verwendung mindestens zweier Winkelpositionen für mindestens zwei Auswuchtmassen, die mindestens zwei Röhrenträgern (3) und ihnen zugeordneten Auswuchtbehältern (6) entsprechen, die beiderseits der im Schritt e1) berechneten Winkelpositionen liegen, und Berechnung mindestens zweier Auswuchtmassen, die jeweils in den gewählten Winkelpositionen entsprechenden Auswuchtbehältern angeordnet werden müssen, wobei die berechneten Auswuchtmassen Bruchteilen der im Schritt d) bestimmten Unwuchtmasse entsprechen derart, dass die Vektorsumme der Zentrifugalkräfte, die auf den berechneten Auswuchtmassen beruhen, sobald diese in den Auswuchtbehältern an den gewählten Winkelpositionen angeordnet worden sind, der Zentrifugalkraft aufgrund der Unwuchtmasse das Gleichgewicht hält.

**4.** Zentrifuge, umfassend:

a) ein Gestell (1);

b) eine Drehscheibe (2), die drehbar an dem Gestellt gelagert ist und mehrere Röhrenträger (3) aufweist, die an definierten Winkelpositionen am Umfang der Drehscheibe angeordnet sind, wobei jeder Röhrenträger zur Aufnahme einer Probenröhre (4) bestimmt ist:

c) Antriebsmittel (16-19) zum Drehen der Drehscheibe;

d) einen Positionsgeber (26) zur Lieferung eines Signals, das eine Winkelposition der Drehscheibe anzeigt;

e) eine Steuer- und Befehlseinheit (27), die das die Winkelposition anzeigende Signal empfängt und die Antriebsmittel (16-19) derart betätigt, dass die Drehscheibe (2) mit mindestens einer vorgegebenen Drehgeschwindigkeit gedreht wird und die Drehscheibe in vorgegebenen Winkelpositionen angehalten wird;

*gekennzeichnet durch*

f) mehrere Auswuchtbehälter (6), die den Röhrenträgern (3) auf der Drehscheibe (2) jeweils zugeordnet sind;

g) einen Beschleunigungssensor (29), der ein Signal liefert, das den Wert der Zentrifugalbeschleunigung anzeigt, der die Drehscheibe (2) bei Drehung mit einer vorgegebenen Geschwindigkeit ausgesetzt ist;

h) eine Vorrichtung (21) zur Versorgung mit einem Auswuchtmedium, die an dem Gestell (1) an einer Stelle benachbart dem Umfang der Drehscheibe (2) angeordnet ist;

i) in der Steuer- und Betätigungseinheit (27) enthaltene Rechenmittel, die anhand der vorgegebenen Drehgeschwindigkeit und anhand der von dem Positionsgeber und dem Beschleunigungssensor gelieferten Signale eine Winkelposition ($\theta_B$) und eine Masse ($m_0$) einer Unwucht (B) auf der Drehscheibe (2) bestimmen, die auf einer ungleichmäßigen Beladung der Drehscheibe beruht;

j) wobei die Berechnungsmittel dafür vorgesehen sind, um anhand der ermittelten Winkelposition ($\theta_B$) der Unwucht (B) mindestens eine Winkelposition ($\theta_E$) auf der Drehscheibe (2) für mindestens eine Auswuchtmasse ($m_1$) zu bestimmen;

k) und wobei die Steuer- und Betätigungseinheit (27) in der Lage ist, die Antriebsmittel (16 - 19) so zu betätigen, dass diese die Drehscheibe (2) in eine solche Halteposition bringen, dass die ermittelte Winkelposition für die Auswuchtmasse ($m_1$) sich in Übereinstimmung mit der ortsfesten Station befindet, und die Einrichtung (21) zur Versorgung mit dem Auswuchtmedium zu betätigen, um denjenigen Auswuchtbehälter (6), der sich an der ortsfesten Station befindet, wenn die Drehscheibe (2) in der genannten Halteposition ist, mit einer Menge des Auswuchtmediums zu befüllen, deren Masse gleich mindestens einem Bruchteil der **durch** die Rechenmittel bestimmten Masse ($m_0$) der Unwucht (B) ist.

**5.** Zentrifuge nach Anspruch 4, **_dadurch gekennzeichnet,_ dass** die Drehscheibe (2), der Positionsgeber (26), der Beschleunigungssensor (29) und die Antriebsmittel (16 - 19) von einer beweglichen Halterung (14) getragen werden, die relativ zum Gestell (1) um eine vertikale Schwenkachse (22) parallel zur Drehachse (11) der Drehscheibe gelagert ist und nach beiden Seiten einer neutralen Position hin- und herschwenken kann, wenn sich die Drehachse mit der vorgegebenen Geschwindigkeit mit ungleichmäßiger Beladung dreht.

**6.** Zentrifuge nach Anspruch 5, **_dadurch gekennzeichnet,_ dass** die Drehachse (11) der Drehscheibe (2) in einem ersten Abstand (L1) von der vertikalen Schwenkachse (22) angeordnet ist, und der Beschleunigungssensor in einem zweiten Abstand (L2) von der vertikalen Schwenkachse (22) angeordnet ist, in einer durch die vertikale Schwenkachse und durch die Drehachse definierten Vertikalebene, wobei der zweite Abstand (L2) größer als der erste Abstand (L1) ist.

**7.** Zentrifuge nach Anspruch 6, **_dadurch gekennzeichnet,_ dass** die Rechenmittel die Masse ($m_0$) der Unwucht (B) nach einer ersten Formel

$$m_0 = \frac{\Gamma'_0}{\gamma_c} \cdot \frac{M}{K}$$

berechnet, in welcher $\Gamma'_0$ ein von dem Beschleunigungssensor (29) gemessener Beschleunigungswert, K ein Verstärkungsfaktor, dessen Wert gleich dem Verhältnis (L2/L1) des zweiten und ersten Abstandes ist, M die Gesamtmasse der beweglichen Halterung (14) und aller von der beweglichen Halterung getragenen Teile der Zentrifuge, und $\gamma_c$ der Wert der Zentrifugalbeschleunigung aufgrund der Masse $m_0$ der Unwucht (B), wenn sich die Drehscheibe (2) mit der vorgegebenen Drehgeschwindigkeit dreht, sind.

**8.** Zentrifuge nach Anspruch 7, **_dadurch gekennzeichnet,_ dass** die Rechenmittel die Masse $m_0$ der Unwucht (B) emeut gemäß einer zweiten Formel:

$$m_0 = \frac{m_1}{K} \cdot \frac{\Gamma'_0}{\gamma_c} \cdot \frac{\Gamma'_1 + K\gamma_c}{\Gamma'_0 - \Gamma'_1}$$

berechnen, in welcher $m_1$ eine erste, gemäß der ersten Formel berechnete Auswuchtmasse, und $\Gamma'_1$ ein Beschleunigungswert ist, der von dem Beschleunigungssensor (29) gemessen wird, wenn die mit der ersten Auswuchtmasse versehene Drehscheibe (2) mit der vorgegebenen Drehgeschwindigkeit angetrieben wird, wobei die Rechenmittel anschließend eine zweite Auswuchtmasse $m_2 = m_0 - m_1$, ausgehend von der zweiten Formel, berechnen, um das Auswuchten der Drehscheibe zu vervollständigen.

**9.** Zentrifuge nach einem der Ansprüche 5 bis 8, **_dadurch gekennzeichnet,_ dass** sie ausrückbare Arretiermittel (32) aufweist, die von der Steuer- und Betätigungseinheit (27) derart gesteuert werden, dass sie die bewegliche Halterung (14) in der neutralen Position halten, wenn die Drehscheibe (2) still steht und wenn sie sich mit einer Geschwindigkeit dreht, die deutlich kleiner ist als die vorgegebene Drehgeschwindigkeit.

**10.** Zentrifuge nach einem der Ansprüche 4 bis 9, **_dadurch gekennzeichnet,_ dass** das Auswuchtmedium eine Flüssigkeit (69) ist.

**11.** Zentrifuge nach Anspruch 10, **_dadurch gekennzeichnet,_ dass** die Anordnung (21) zur Versorgung mit dem Auswuchtmedium umfasst

a) an der ortsfesten Station eine vertikale Hohlnadel für die Befüllung und die Entleerung (41) und einen von der Steuer- und Betätigungseinheit (27) gesteuerten Hebe- und Absenkmechanismus (61) zum vertikalen Bewegen der Nadel (41) zwischen einer oberen Wartestellung, in der das untere Ende der Nadel sich auf einem höheren Niveau befindet als eine obere Öffnung des zu befüllenden Auswuchtbehälters (6), und mindestens einer unteren Füll- und Entleerposition, in der die Nadel (41) in den zu befüllenden oder entleerenden Auswuchtbehälter (6) eingeführt ist;

b) ein Reservoir (42) für Auswuchtflüssigkeit; und

c) eine Pumpe (43), die mit dem Reservoir (42) für Auswuchtflüssigkeit und der Nadel (41) durch Schläuche (44 - 48) und ein von der Steuer- und Betätigungseinheit (27) gesteuertes Elektroventil (49) verbunden ist, wobei das Elektroventil eine neutrale WarteStellung, eine erste Arbeitsstellung, in der die Auswuchtflüssigkeit von dem Reservoir (42) zur Nadel (41) fließen kann, und eine zweite Arbeitsstellung, in der die Auswuchtflüssigkeit von der Nadel (41) zu dem Reservoir (42) fließen kann, hat.

12. Zentrifuge nach Anspruch 11, *dadurch gekennzeichnet,* **dass** sie ferner eine Flüssigkeitsstandsfühler (63) aufweist, der betrieben wird, um ein Flüssigkeitsniveau in einem an der ortsfesten Station befindlichen Auswuchtbehälter (6) zu erfassen und ein Signal zu liefern, welches dem erfassten Flüssigkeitsstand entspricht und von der Steuer- und Betätigungseinheit (27) zum Steuern der Pumpe (43) und/oder des Elektroventils (49) verwendbar ist.

FIG.1

EP 1 502 651 B1

FIG.2

EP 1 502 651 B1

FIG.3

FIG.4

EP 1 502 651 B1

FIG.5

FIG.6

FIG.7

FIG.8

FIG.9

FIG.10

FIG.11